(19)

Europäisches
Patentamt
European
Patent Office
Office européen
des brevets

(11) **EP 4 147 794 A1**

(12) **EUROPEAN PATENT APPLICATION**
published in accordance with Art. 153(4) EPC

(43) Date of publication:
**15.03.2023 Bulletin 2023/11**

(21) Application number: **21800459.6**

(22) Date of filing: **07.05.2021**

(51) International Patent Classification (IPC):
**B05D 3/04** (2006.01) **B05D 5/04** (2006.01)
**B05D 7/14** (2006.01) **B21D 51/26** (2006.01)
**B32B 27/36** (2006.01) **B65D 25/14** (2006.01)
**B65D 25/20** (2006.01) **B65D 25/34** (2006.01)
**B41J 2/01** (2006.01) **B32B 1/08** (2006.01)
**B32B 7/02** (2006.01)

(52) Cooperative Patent Classification (CPC):
**B65D 25/34; B32B 1/08; B32B 7/02; B32B 27/36;
B41J 2/01; B65D 1/165; B65D 1/265;** B21D 51/26;
B41J 3/40733

(86) International application number:
**PCT/JP2021/017452**

(87) International publication number:
**WO 2021/225156 (11.11.2021 Gazette 2021/45)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: 07.05.2020 JP 2020082264
07.05.2020 JP 2020082275
07.05.2020 JP 2020082277
28.04.2021 JP 2021076833
28.04.2021 JP 2021076781
30.04.2021 JP 2021076965

(71) Applicant: **Toyo Seikan Co., Ltd.
Tokyo 141-8640 (JP)**

(72) Inventors:
• **SAITO, Yukiko
Yokohama-shi, Kanagawa 230-0001 (JP)**
• **MURAKAMI, Shigenobu
Yokohama-shi, Kanagawa 230-0001 (JP)**
• **YAMADA, Kouji
Yokohama-shi, Kanagawa 230-0001 (JP)**

(74) Representative: **Pfenning, Meinig & Partner mbB
Patent- und Rechtsanwälte
Theresienhöhe 11a
80339 München (DE)**

(54) **CAN CONTAINER**

(57)     A first aspect of the present invention provides a can container including: a can body of a cylindrical shape, and at least a surface coating layer, in which the surface coating layer is formed on at least a part of an outer peripheral surface of the can body, the surface coating layer has a resin component, and surface free energy of a surface of the surface coating layer is 30 mJ/m$^2$ or more and 50 mJ/m$^2$ or less at a temperature of 25°C.

EP 4 147 794 A1

```
                    ┌──────────┐
                    │  START   │
                    └──────────┘
                         │
                         ▼
        ┌────────────────────────────────────┐
        │           WET MOLDING              │ ──── S10
        └────────────────────────────────────┘
                         │
                         ▼
        ┌────────────────────────────────────┐
        │         VARNISH IS APPLIED         │ ──── S20
        └────────────────────────────────────┘
                         │
                         ▼
        ┌────────────────────────────────────┐
        │        BAKING IS PERFORMED TO      │ ──── S30
        │     FORM SURFACE COATING LAYER     │
        └────────────────────────────────────┘
                         │
                         ▼
        ┌────────────────────────────────────┐
        │      PAINT IS APPLIED TO INNER     │ ──── S40
        │      PERIPHERAL SURFACE OF CAN     │
        │  CONTAINER, AND BAKING IS PERFORMED│
        └────────────────────────────────────┘
                         │
                         ▼
        ┌────────────────────────────────────┐
        │      NECKING IS PERFORMED ON CAN   │ ──── S50
        │    CONTAINER TO FORM DIAMETER      │
        │          REDUCTION PORTION         │
        └────────────────────────────────────┘
                         │
                         ▼
        ┌────────────────────────────────────┐
        │      INK COMPOSITION IS PRINTED    │ ──── S60
        └────────────────────────────────────┘
                         │
                         ▼
        ┌────────────────────────────────────┐
        │        BAKING IS PERFORMED TO      │ ──── S70
        │       FORM PRINT IMAGE LAYER       │
        └────────────────────────────────────┘
                         │
                         ▼
        ┌────────────────────────────────────┐
        │      CAN CONTAINER IS INSPECTED    │ ──── S80
        └────────────────────────────────────┘
                         │
                         ▼
        ┌────────────────────────────────────┐
        │  CAN CONTAINER IS FILLED WITH CONTENT │ ──── S90
        └────────────────────────────────────┘
                         │
                         ▼
        ┌────────────────────────────────────┐
        │  CAN LID IS ATTACHED TO CAN CONTAINER │ ──── S95
        └────────────────────────────────────┘
                         │
                         ▼
                    ┌──────────┐
                    │   END    │
                    └──────────┘
```

*FIG.15*

**Description**

BACKGROUND

1. TECHNICAL FIELD

The present invention relates to a can container.

2. RELATED ART

In a can container such as a can for beverage, it is commonly performed to form a diameter reduction portion at an end portion on an opening side of a can body. It has been known that an application of a varnish to a surface of the can body, before the diameter reduction portion is formed, prevents the can body from being scratched, or prevents metal powder from adhering to a mold for forming the diameter reduction portion.

Patent Document 1 describes that printing is performed after a diameter reduction portion is formed on a can body and that a varnish is applied before the diameter reduction portion is formed. Patent Document 2 describes that a base layer is formed by an over varnish or the like and then an image is formed by an inkjet.

Prior Art Document

Patent Document

Patent Document 1: Japanese Patent Application Publication No. 2019-025521

Patent Document 2: Japanese Patent Application Publication No. 2019-108138

SUMMARY

A first aspect of the present invention provides a can container that includes a can body of a cylindrical shape, and at least a surface coating layer. The surface coating layer may be formed on at least a part of an outer peripheral surface of the can body. The surface coating layer may have a resin component. Surface free energy of a surface of the surface coating layer may be 30 mJ/m$^2$ or more and 50 mJ/m$^2$ or less at a temperature of 25°C.

In addition, in the second aspect, the resin component of the can container may have a structure which is derived from an isophthalic acid.

In addition, in the third aspect, the resin component of the can container may contain a polyester resin.

In addition, in the fourth aspect, for surface roughness of the surface of the surface coating layer of the can container, arithmetic average roughness (Ra) may be 2 μm or less, and a maximum height (Rz) is 10 μm or less.

In addition, in the fifth aspect, glossiness of the surface of the surface coating layer of the can container may be 100 or less.

In addition, in the sixth aspect, the can container may further include a primer layer. At least a part of the surface coating layer of the can container may be provided on the primer layer.

In addition, in the seventh aspect, a coefficient of dynamic friction of the surface of the surface coating layer of the can container may be 0.30 or less.

In addition, in the eighth aspect, thickness of the surface coating layer of the can container may be 0.5 μm or more and 15 μm or less.

In addition, in the ninth aspect, the can body of the can container may have a diameter reduction portion of which a diameter is reduced at one end, and a can barrel portion. The surface coating layer of the can container may be provided on at least the diameter reduction portion.

In addition, in the tenth aspect, the can container may further include a print image layer formed on the surface coating layer.

In addition, the eleventh aspect provides a can container that has a can body of a cylindrical shape. A print image layer may be formed on at least a part of an outer peripheral surface of the can body. Surface free energy of the outer peripheral surface of the can body may be 30 mJ/m$^2$ or more and 50 mJ/m$^2$ or less at a temperature of 25°C.

In addition, in the twelfth aspect, the can body of the can container may have a diameter reduction portion of which a diameter is reduced at one end, and a can barrel portion.

In addition, in the thirteenth aspect, the can container may further include a receiving layer formed on the outer peripheral surface of the can body or the surface coating layer. The print image layer of the can container may be formed on the receiving layer.

In addition, in the fourteenth aspect, in the can container, a protective layer having a resin component may be formed on the print image layer.

In addition, in the fifteenth aspect, the can body of the can container may have a diameter reduction portion of which a diameter is reduced at one end, and a can barrel portion. The can container may include a base image layer formed on at least the diameter reduction portion. The surface coating layer of the can container may be provided on at least the base image layer.

In addition, in the sixteenth aspect, the can body of the can container may have a diameter reduction portion of which a diameter is reduced at one end, and a can barrel portion. In the can container, an ink-repellent varnish layer having a resin component and a wax component may be formed on at least the diameter reduction portion. Surface free energy of a surface of the ink-repellent varnish layer on the can container may be 20 mJ/m$^2$ or less at the temperature of 25°C.

In addition, in the seventeenth aspect, the can container may be a metal cup having an opening at an end portion.

In addition, the eighteenth aspect provides a manufacturing method for a can container that includes a can body of a cylindrical shape, and at least a surface coating layer. In the manufacturing method, a varnish having a resin component and a wax component may be applied to at least a part of an outer peripheral surface of the can body, or, at least a part of the outer peripheral surface of the can body may be coated with a resin film. The manufacturing method may include forming the surface coating layer of which surface free energy is 30 mJ/m$^2$ or more and 50 mJ/m$^2$ or less at a temperature of 25°C. The manufacturing method may include reducing a diameter of at least a part of a portion where the surface coating layer is formed in the can container.

In addition, the nineteenth aspect provides a manufacturing method for a can container that includes a can body of a cylindrical shape, and at least a surface coating layer. In the manufacturing method, a varnish having a resin component and a wax component may be applied to at least a part of an outer peripheral surface of the can body, or, at least a part of the outer peripheral surface of the can body may be coated with a resin film. The manufacturing method may include forming the surface coating layer of which surface free energy is 30 mJ/m$^2$ or more and 50 mJ/m$^2$ or less at a temperature of 25°C. The manufacturing method may include reducing a diameter of at least a part of a portion where the surface coating layer is formed in the can container. The manufacturing method may include printing an ink composition to form a print image layer.

In addition, in the twentieth aspect, the resin film of the can container may have a structure which is derived from an isophthalic acid.

In addition, in the twenty first aspect, the resin film of the can container may contain a polyester resin.

In addition, in the twenty second aspect, for surface roughness of a surface of the resin film of the can container, arithmetic average roughness (Ra) may be 2 μm or less, and a maximum height (Rz) is 10 μm or less.

In addition, in a twenty third aspect, glossiness of the surface of the resin film of the can container may be 100 or less.

In addition, in a twenty fourth aspect, the coating of the resin film in the manufacturing method may include forming a primer layer on at least a part of the outer peripheral surface of the can body. The coating of the resin film in the manufacturing method may include coating at least a part of the outer peripheral surface, including the primer layer, with the resin film, in the outer peripheral surface of the can body.

In addition, in a twenty fifth aspect, a coefficient of dynamic friction of a surface of the surface coating layer of the can container may be 0.30 or less.

In addition, in a twenty sixth aspect, thickness of the surface coating layer of the can container may be 0.5 μm or more and 15 μm or less.

In addition, in a twenty seventh aspect, the can body of the can container may have a diameter reduction portion of which a diameter is reduced at one end, and a can barrel portion. The surface coating layer of the can container may be provided on at least the diameter reduction portion.

In addition, a twenty eighth aspect provides a manufacturing method for a can container that has a can body of a cylindrical shape. The manufacturing method may include performing atmospheric pressure plasma treatment. The manufacturing method may include printing an ink composition on a surface, on which the atmospheric pressure plasma treatment has been performed, to form a print image layer. An outer peripheral surface of the can body may be a curved surface or a polyhedral surface.

In addition, in a twenty ninth aspect, the performing the atmospheric pressure plasma treatment in the manufacturing method may include performing the atmospheric pressure plasma treatment on at least a part of the outer peripheral surface of the can body.

In addition, in the thirtieth aspect, the performing the atmospheric pressure plasma treatment in the manufacturing method may include forming a surface coating layer on at least a part of the outer peripheral surface of the can body. The performing the atmospheric pressure plasma treatment in the manufacturing method may include performing the atmospheric pressure plasma treatment on at least a part of the surface coating layer.

In addition, in the thirty first aspect, the atmospheric pressure plasma treatment in the manufacturing method may be performed by a remote method of blowing, by a gas flow, plasma generated between electrodes to at least a part of the surface.

In addition, in the thirty second aspect, the atmospheric pressure plasma treatment in the manufacturing method may be performed by a direct method of directly radiating plasma generated between electrodes to at least a part of the surface.

In addition, in a thirty third aspect, surface free energy of the surface, after the atmospheric pressure plasma treatment in the manufacturing method is performed, may be 30 mJ/m$^2$ or more and 50 mJ/m$^2$ or less at a temperature of 25°C.

In addition, in a thirty fourth aspect, a coefficient of dynamic friction of the surface, after the atmospheric pressure plasma treatment in the manufacturing method is performed, may be 0.30 or less.

In addition, in a thirty fifth aspect, in the performing the atmospheric pressure plasma treatment in the manufacturing method, a minimum value of a distance between an electrode which is used, and the surface may be 50 mm or less.

In addition, in a thirty sixth aspect, the manufacturing method may further include reducing a diameter of at least a part of the can body. The can body in the manufacturing method may have a diameter reduction portion of which a diameter is reduced at one end, and a can barrel portion.

In addition, in a thirty seventh aspect, the forming the print image layer in the manufacturing method may include forming a receiving layer on the outer peripheral surface of the can body or the surface coating layer. The forming the print image layer in the manufacturing method may include printing an ink composition on the receiving layer to form a print image layer.

In addition, in the thirty eighth aspect, the forming the print image layer in the manufacturing method may be performed by inkjet printing.

In addition, in a thirty ninth aspect, the manufacturing method may further include forming, on the print image layer, a protective layer having a resin component.

In addition, in the fortieth aspect, the forming the print image layer in the manufacturing method may include fixing the can container to a can container holding member by chucking to print the ink composition.

In addition, in a forty first aspect, the manufacturing method for a can container may further include forming a base image layer on at least a diameter reduction portion. The can body of the can container in the manufacturing method may have the diameter reduction portion of which the diameter is reduced at one end, and a can barrel portion. In the can container of the manufacturing method, the surface coating layer or the print image layer may be provided on at least the base image layer.

In addition, in the forty second aspect, the manufacturing method for a can container may further include forming, on at least a diameter reduction portion, an ink-repellent varnish layer having a resin component and a wax component. The can body of the can container in the manufacturing method may have the diameter reduction portion of which the diameter is reduced at one end, and a can barrel portion. Surface free energy of a surface of the ink-repellent varnish layer on the can container in the manufacturing method may be 20 mJ/m$^2$ or less at a temperature of 25°C.

In addition, a forty third aspect provides a manufacturing method for a can container that has a can body of a cylindrical shape. The manufacturing method may include forming a surface coating layer by applying a varnish having a wax component to at least a part of an outer peripheral surface of the can body, or forming an additional varnish layer by coating at least a part of the outer peripheral surface of the can body, with a resin film to form a surface coating layer, and then applying a varnish having a wax component. The manufacturing method may include reducing a diameter of at least a part of a portion where the surface coating layer is formed in the can container. The manufacturing method may include heating the can container to evaporate at least a part of the wax component contained in the surface coating layer or the additional varnish layer.

In addition, a forty fourth aspect provides a manufacturing method for a can container that has a can body of a cylindrical shape. The manufacturing method may include forming a surface coating layer by applying a varnish having a wax component to at least a part of an outer peripheral surface of the can body, or forming an additional varnish layer by coating at least a part of the outer peripheral surface of the can body, with a resin film to form a surface coating layer, and then applying a varnish having a wax component

The manufacturing method may include reducing a diameter of at least a part of a portion where the surface coating layer is formed in the can container. The manufacturing method may include washing the can container to remove at least a part of the wax component contained in the surface coating layer or the additional varnish layer.

In addition, in the forty fifth aspect, after the evaporating at least a part of the wax component in the manufacturing method, or the removing at least a part of the wax component in the manufacturing method is performed, surface free energy of the can container may be 30 mJ/m$^2$ or more and 50 mJ/m$^2$ or less at a temperature of 25°C.

In addition, in a forty sixth aspect, the can container in the manufacturing method may be a metal cup having an opening at an end portion.

The summary clause does not necessarily describe all necessary features of the embodiments of the present invention. The present invention may also be a sub-combination of the features described above.

BRIEF DESCRIPTION OF THE DRAWINGS

Fig. 1 shows an example of a sketch of a can container before image printing in the present embodiment.

Fig. 2 shows an example of a sketch of the can container after the image printing in the present embodiment.

Fig. 3 shows an example of an overall layer configuration of the can container in the present embodiment.

Fig. 4 shows an example of the overall layer configuration of the can container in the present embodiment.

Fig. 5 shows an example of the overall layer configuration of the can container in the present embodiment.

Fig. 6 shows an example of the overall layer configuration of the can container in the present embodiment.

Fig. 7 shows an example of the overall layer configuration of the can container in the present embodiment.

Fig. 8 shows an example of the overall layer configuration of the can container in the present embodiment.

Fig. 9 shows an example of the overall layer configuration of the can container in the present embodiment.

Fig. 10 shows an example of the overall layer configuration of the can container in the present embodiment.

Fig. 11 shows an example of the overall layer configuration of the can container in the present embodiment.

Fig. 12 shows an example of the overall layer configuration of the can container in the present embodiment.

Fig. 13 shows an example of the overall layer configuration of the can container in the present embodiment.

Fig. 14 shows an example of the overall layer configuration of the can container in the present embodiment.

Fig. 15 shows an example of a flow of a manufacturing method by wet molding of the can container of the present embodiment.

Fig. 16 shows an example of the flow of the wet molding of S10 in the present embodiment.

Fig. 17 shows an example of a flow of a manufacturing method for a can container of the present embodiment by dry molding.

Fig. 18 shows an example of the flow of the dry molding of S 110 in the present embodiment.

Fig. 19 shows an example of a flow for forming a base image layer in the present embodiment.

Fig. 20 shows an example of a flow for forming a primer layer in the present embodiment.

Fig. 21 shows an example of a flow for forming an ink-repellent varnish layer in the present embodiment.

Fig. 22 shows an example of a flow for forming an additional varnish layer in the present embodiment.

Fig. 23 shows an example of a flow forming a receiving layer in the present embodiment.

Fig. 24 shows an example of a flow for heating and evaporating a wax component in the present embodiment.

Fig. 25 shows an example of a flow for washing and removing the wax component in the present embodiment.

Fig. 26 shows an example of a flow for forming a protective layer in the present embodiment.

Fig. 27 shows a modification example of the flow of the manufacturing method for a can container in the present embodiment.

Fig. 28 shows an example of a flow for performing atmospheric pressure plasma treatment in the present embodiment.

Fig. 29 shows an example of the atmospheric pressure plasma treatment by a remote method in the present embodiment.

Fig. 30 shows an example of an installation of the atmospheric pressure plasma treatment apparatus by the remote method in the present embodiment.

Fig. 31 shows an example of the installation of the atmospheric pressure plasma treatment apparatus by the remote method in the present embodiment.

Fig. 32 shows an example of the installation of the atmospheric pressure plasma treatment apparatus by the remote method in the present embodiment.

Fig. 33 shows an example of the installation of the atmospheric pressure plasma treatment apparatus by the remote method in the present embodiment.

Fig. 34 shows an example of the atmospheric pressure plasma treatment by a direct method in the present embodiment.

Fig. 35 shows an example of the installation of the atmospheric pressure plasma treatment apparatus by the direct method in the present embodiment.

Fig. 36 shows an example of the sketch of the can container before the image printing in the present embodiment.

Fig. 37 shows an example of the sketch of the can container before the image printing in the present embodiment.

Fig. 38 shows an example of the sketch of the can container before the image printing in the present embodiment.

DESCRIPTION OF EXEMPLARY EMBODIMENTS

Hereinafter, the invention will be described through embodiments of the invention, but the following embodiments do not limit the invention according to claims. In addition, not all the combinations of features described in the embodiments are essential for means to solve the problem in the invention.

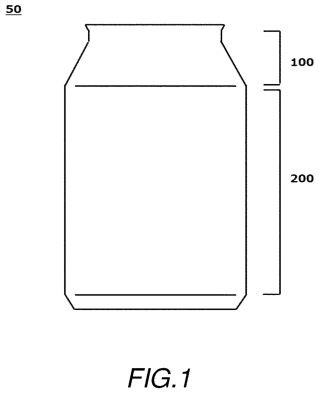

Fig. 1 shows an example of a sketch of a can container 50 before image printing in the present embodiment. The can container 50 according to the present invention can print with an excellent image quality without repelling an ink during printing even after a surface coating layer is formed. The can container 50 includes a diameter reduction portion 100 provided on one end side, and a can barrel portion 200 provided on the other end side.

The diameter reduction portion 100 is a portion where a diameter of one end of the can container 50 is reduced. The diameter reduction portion 100 may be provided on an opening portion of the can container 50. By providing the diameter reduction portion 100 in the can container 50, it is possible to reduce an amount of use of a can lid that is attached to the opening portion of the can container 50.

The diameter reduction portion 100 may be formed by performing necking on the can container 50. The diameter reduction portion 100 may be formed such that as it approaches one end of the can container 50 an outer diameter gradually becomes small. In addition, the diameter reduction portion 100 may have a flange formed at the same time as the necking. The formed flange makes it possible to attach the can lid.

The can barrel portion 200 is a portion of the can container 50 other than the diameter reduction portion 100. The can barrel portion 200 may include a bottom portion. The can barrel portion 200 may be provided on a bottom portion side of the can container 50. The outer diameter of the can barrel portion 200 may be substantially constant in a long axis direction of the can container 50. A diameter of the can barrel portion 200 may be reduced on the bottom portion side of the can container 50. The can barrel portion 200 has a larger surface area on an outer peripheral surface than the diameter reduction portion 100, and has the substantially constant outer diameter. Therefore, the can barrel portion 200 is suitable for the printing on a surface of the can container 50.

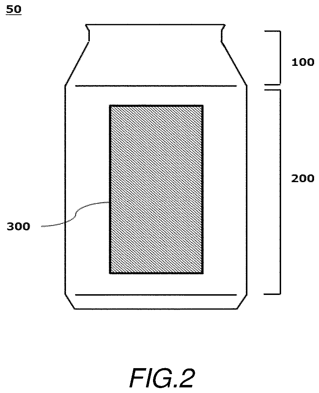

Fig. 2 shows an example of a sketch of the can container 50 after the image printing in the present embodiment. The can container 50 may include the diameter reduction portion 100 provided on one end side, the can barrel portion 200 provided on the other end side, and a print portion 300. The print portion 300 is a region on which the printing is performed by using an ink composition on at least a part of the outer peripheral surface of the can container 50. The print portion 300 may be provided on the can barrel portion 200 of the can container 50. The print portion 300 may be provided on the diameter reduction portion 100 of the can container 50 (not shown).

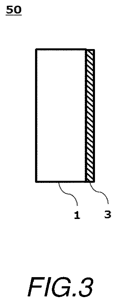

Fig. 3 shows an example of an overall layer configuration of the can container 50 in the present embodiment. The can container 50 may include a can body 1 and a print image layer 3 as a layer structure.

The can body 1 is a main body of the can container 50 and houses most of contents. The can body 1 is formed in a cylindrical shape and has the outer peripheral surface. The can body 1 may be either a seamless can or a welded can. A material of the can body 1 may be either aluminum or steel, but is not limited to these. For example, the can body 1 may be a metal cup having an opening at an end portion. The outer peripheral surface of the can body 1 may be a curved surface, or may be a polyhedral surface. The details will be described below.

Surface free energy of the outer peripheral surface of the can body 1, which is calculated from the Kaelble-Uy formula based on a contact angle that is measured in accordance with JIS R 3257: 1999, may be 30 mJ/m$^2$ or more and 50 mJ/m$^2$ or less at a temperature of 25°C. Such surface free energy can be realized by performing atmospheric pressure plasma treatment on at least a part of the outer peripheral surface of the can body 1. The surface free energy of the outer peripheral surface of the can body 1, before the atmospheric pressure plasma treatment is performed, may be less than 30 mJ/m$^2$ at the temperature of 25°C. The atmospheric pressure plasma treatment is a treatment of imparting a functional group having polarity to a surface by plasma generated by ionizing a gas molecule in the air. The atmospheric pressure plasma treatment can enhance hydrophilicity of the surface. By the atmospheric pressure plasma treatment being performed and the surface free energy of the outer peripheral surface of the can body 1 satisfying the range described above, it is possible to prevent the ink from being repelled even when the printing is performed on the can body 1, and it is possible to form an image with the excellent image quality on the can body 1. The details of the atmospheric pressure plasma treatment will be described below.

The surface free energy of the outer peripheral surface of the can body 1 can be calculated based on the contact angle that is measured in accordance with JIS R 3257: 1999 (IEC62073) by using a contact angle meter. Specifically, it is possible to perform a measurement by the following procedure.

1) Contact angles of pure water and methylene iodide are measured in accordance with JIS R 3257: 1999 "Testing method of wettability of glass substrate ". As a measurement apparatus, a contact angle meter (DropMaster DM500 manufactured by Kyowa Interface Science Co., Ltd.) may be used.

2) By using an obtained value of the contact angle, the surface free energy is calculated from the following Kaelble-Uy formula.

$$\gamma s = \gamma s^d + \gamma s^p$$

$$\gamma w(1+\cos\theta w)=2(\gamma s^d \gamma w^d)^{1/2}+2(\gamma s^p \gamma w^p)^{1/2}$$

$$\gamma i(1+ \cos\theta i)=2(\gamma s^d \gamma i^d)^{1/2}+2(\gamma s^p \gamma i^p)^{1/2}$$

Here, respectively, $\gamma s$ shows the surface free energy of the surface, $\gamma s^d$ shows a dispersion component of the surface free energy of the surface, $\gamma s^p$ shows a polar component of the surface free energy of the surface, $\gamma w$ shows 72.8 mJ/m$^2$, $\gamma w^d$ shows 21.8 mJ/m$^2$, $\gamma w^p$ shows 51.0 mJ/m$^2$, $\gamma i$ shows 50.8 mJ/m$^2$, $\gamma i^d$ shows 48.5 mJ/m$^2$, $\gamma i^p$ shows 2.3 mJ/m$^2$, $\theta w$ shows a water contact angle on the surface, and $\theta i$ shows a methylene iodide contact angle on the surface. The $\gamma w$, $\gamma w^d$, $\gamma w^p$, $\gamma i$, $\gamma i^d$, and $\gamma i^p$ are known literature values.

In addition, a coefficient of dynamic friction of the outer peripheral surface of the can body 1, which is measured in accordance with JIS K 7125: 1999, may be 0.30 or less. Such a coefficient of dynamic friction can also be realized by performing the atmospheric pressure plasma treatment on at least a part of the outer peripheral surface of the can body 1. In a case where the coefficient of dynamic friction of the surface of the can body 1 exceeds 0.30, slipperiness with respect to a processing tool deteriorates during the necking, a load during molding is unevenly applied to a processed portion, and buckling of the can barrel portion 200 may occur. In addition, in a case where the coefficient of dynamic friction on the surface of the can body 1 exceeds 0.30, the slipperiness with respect to a conveyance guide or the adjacent can body 1 deteriorates when the can body is conveyed, and clogging or poor flowing may occur in a production line of the can body 1 or a content filling line after the production line.

The coefficient of dynamic friction of the outer peripheral surface of the can body 1 may be measured in accordance with JIS K 7125: 1999. As a measurement machine of the coefficient of dynamic friction, a heating type measurement instrument AB-550-TS (manufactured by Tester Sangyo Co., Ltd.) for the friction coefficient may be used. As a fixed test piece, a test piece of the can container 50 on which a surface coating layer 2 is formed may be used, and as a moving test piece, a stainless steel ball with a diameter of 10 mm may be used. In a state in which a load of 1 N is applied to the moving test piece by a weight, by moving the moving test piece by a distance of 100 mm at a sliding speed of 150 mm/min, it is possible to measure the coefficient of dynamic friction.

The print image layer 3 is a layer of an image that expresses a character, a pictorial pattern, or the like on the outer peripheral surface of the can container 50. The print image layer 3 may be provided on at least a part of the outer peripheral surface of the can body 1. The print image layer 3 may constitute the print portion 300 in the can container 50.

The print image layer 3 may be a layer where the printing is performed on the can container 50 by using the ink composition. The ink composition may be, but is not limited to, a water-based ink, a solvent ink, an ultraviolet curable ink, or an electron beam curable ink. An image formed on the print image layer 3 may be a color image obtained by using ink compositions of a plurality of colors. The image formed on the print image layer 3 may be a monochrome image obtained by using the ink composition of one color.

For example, the print image layer 3 may be provided on the can body 1 by performing inkjet printing. As an example, the print image layer 3 is provided on the can body 1 by performing direct type inkjet printing. As an example, the print image layer 3 is provided on the can body 1 by performing the inkjet printing by an offset method. The details of these inkjet printing methods will be described below.

The can container 50 of the embodiment shown in Fig. 3 has a minimum necessary configuration including the can body 1 and the print image layer 3. Therefore, the can container 50 of the embodiment shown in Fig. 3 can have the image with the excellent image quality while reducing the number of steps and a cost.

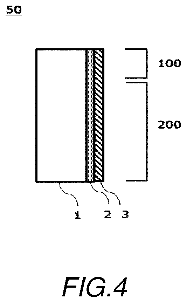

Fig. 4 shows an example of the overall layer configuration of the can container 50 in the present embodiment. The can container 50 may include the can body 1, the surface coating layer 2, and the print image layer 3 as the layer structure. It should be noted that unless otherwise specified, the above description may be, as it is, applied to the layer configuration.

The surface coating layer 2 has a role of enhancing the slipperiness of the can container 50 when the diameter reduction portion 100 is formed in the can container. The surface coating layer 2 may be provided on at least a part of the outer peripheral surface of the can body 1. The surface coating layer 2 may be provided on at least the diameter reduction portion 100 of the can container 50.

The surface coating layer 2 may contain a varnish, and the varnish contained in the surface coating layer 2 may contain at least a resin component. The varnish may contain at least a wax component. The varnish may contain both of the resin component and the wax component. The varnish may contain, but is not limited to, a thermosetting acrylic-based resin, a thermosetting epoxy-based resin, or a thermosetting polyester-based resin as the resin component. The varnish may contain, but is not limited to, olefin-based hydrocarbon, paraffin-based hydrocarbon, fat and oil, a synthetic polymer-based resin, and an organic fluorine compound as the wax component.

The varnish contained in the surface coating layer 2 may not contain a leveling agent. The leveling agent is an additive having an action of smoothing the surface by being applied to the surface, and an example thereof includes an anti-foaming agent, an anti-repellent agent, a fluorine-based compound, a silicon-based compound, or the like.

In addition, the surface coating layer 2 may be a layer coated with a resin film. The resin may be a polyester resin. As an example, the resin film is a polyethylene terephthalate resin.

The resin film may have a structure constituted by the polyester resin. As the polyester resin, a copolyester containing a dibasic acid as a copolymer component, that is, a first polyester of a low crystallinity may be used (hereinafter, this first polyester is referred to as a low crystalline polyester). Specifically, the low crystalline polyester may be a copolyester including a main ester unit which is formed from diol and dibasic acid, and a copolymer ester unit which has the same diol component as the main ester unit but which has a dibasic acid component different from that of the main ester unit. Such a copolyester has a copolymer dibasic acid unit incorporated, and thus has the low crystallinity, and is softer and more flexible than a homopolyester which does not contain a copolymer component. Therefore, even during harsh seamless processing, it is possible to easily follow the processing deformation of a base material (for example, an aluminum base material or the like) of the can body 1 and to maintain high adhesion between the can body 1 and the resin film. In particular, it is possible to effectively prevent an occurrence of a scratch, peeling, or the like during post-processing after seamless can molding.

The diol component used to form the main ester unit may be ethylene glycol, propylene glycol, 1,4-butanediol, diethylene glycol, 1,6-hexylene glycol, cyclohexanedimethanol, ethylene oxide adducts of bisphenol A, or the like.

In addition, the dibasic acid component may be an aromatic dicarboxylic acid such as a terephthalic acid, an isophthalic acid, a phthalic acid, and a naphthalene dicarboxylic acid; an alicyclic dicarboxylic acid such as a cyclohexanedicarboxylic acid; an aliphatic dicarboxylic acid such as a succinic acid, an adipic acid, a sebatic acid, and a dodecanedioic acid, or the like.

In the present embodiment, the main ester unit may be preferably an ethylene terephthalate unit, an ethylene naphthalate unit, or a butylene terephthalate unit, and may be more preferably an ethylene terephthalate unit from a viewpoint of molding processability, heat resistance, or the like.

Further, the copolymer ester unit, which has the same diol component as the ester unit but which has the dibasic acid component different from that of the main ester unit, may have a ratio of 13 mol% to 17 mol% in the whole ester unit. When a content of the copolymer ester unit exceeds 17 mol%, a property (for example, a strength or the like) of the polyester formed from the main ester unit may be impaired, and when the content is less than 13 mol%, the adhesion between the can body 1 and the resin film may be reduced.

As such a copolymer ester unit, when the main ester unit is an ethylene terephthalate unit, an ethylene naphthalate unit, or a butylene terephthalate unit, the ester unit containing the isophthalic acid as the dibasic acid component is preferable.

Further, in the present embodiment, a polybasic acid having a valence of 3 or more may be introduced into the above-described low crystalline polyester (the copolyester). That is, the resin film is formed by laminating the above-mentioned low crystalline polyester on an inorganic surface treatment film on the surface of the base material such as the aluminum base material by melt extrusion; however, in such a low crystalline polyester, neck-in (a phenomenon in which a film shaped resin that is melt-extruded becomes narrower than a width of a die outlet) is likely to occur during extrusion laminating. Such a neck-in causes unevenness in thickness of the resin film, and a variation in property such as adhesion occurs. In the present embodiment, by introducing a polybasic acid copolymer unit having a valence of 3 or more together with a dibasic acid copolymer unit, a property of melt fluidity of the low crystalline polyester is improved and it is possible to effectively suppress the occurrence of the neck-in.

The above-described polybasic acid having a valence of 3 or more may be, but is not limited, a trimellitic acid, a pyromellitic acid, a hemimeric acid, 1,1,2-ethane carboxylic acid, 1,1,22,2-ethane tricarboxylic acid, 1,3,5-pentane tricarboxylic acid, 1,2,3,4-cyclopentane tetracarboxylic acid, biphenyl-3,4,3', 4'-tetracarboxylic acid. More preferably, the above-described polybasic acid having a valence of 3 or more may be the trimellitic acid.

Such a polybasic acid may be used in an amount of 0.01 mol% to 0.5 mol% per the whole acid component (including the polybasic acid) for forming the polyester. When the polybasic acid is smaller than 0.01 mol%, the neck-in tends to be large, and when polybasic acid exceeds 0.5 mol%, pressure of the extrusion during the laminating increases, and a control of film thickness may become unstable.

The above-mentioned copolyester only needs to have a molecular weight capable of forming a film, and from a viewpoint of film formability, heat resistance, strength, or the like may usually have a glass transition point (Tg) of 50°C to 90°C, preferably 55°C to 80°C, and have a melting point (Tm) in a range of 200°C to 275°C, and, preferably 220°C to 270°C.

In the present embodiment, the polyester may be preferably a low crystalline polyester (the copolyester) having an ethylene terephthalate unit as the main ester unit, and having an ethylene isophthalate unit and a trimellitic acid ester unit as the copolymer ester unit.

In addition, the resin film may have a structure in which a plurality of different layers are stacked, the different layers being adjusted to have different crystallinities to increase the adhesion to a can body 1 side. When the resin film has the above-described structure, it is possible to exhibit the property of the resin film having excellence in strength and adhesion to the can body 1.

Arithmetic average roughness (Ra) of the surface of the resin film may be 2 μm or less. For the resin film, a maximum height (Rz) of the surface of the resin film may be 10 μm or less. The arithmetic average roughness may be considered as an index of an average value of a height difference on the surface of the resin film. The maximum height may be considered as an index of a maximum value of the height difference on the surface of the resin film. In a case where the arithmetic average roughness exceeds 2 μm or the maximum height exceeds 10 μm, the resin film is not smooth, and even when the printing is performed by using the ink composition on the resin film, the image quality may be inferior. Measurement conditions and calculation methods of the arithmetic average roughness and the maximum height may be in accordance with "ISO 25178 surface texture (a surface roughness measurement)". In addition, the arithmetic average roughness may be measured in a non-contact manner by using a 3D measuring laser microscope or the like.

Glossiness of the surface of the resin film may be 100 or less. The glossiness may be expressed, as 100 (%), with a value based on a mirror glossiness at a specified incident angle of 60 degrees, on a glass surface in which a refractive index is a constant value of 1.567 over an entire visible wavelength range. By the glossiness of the surface of the resin film being 100 or less, when the printing is performed on the resin film by using the ink composition, the printing can be performed with the excellent image quality. The measurement condition for the glossiness may be in accordance with "JIS Z 8741". The glossiness may be measured by using a gloss meter (for example, Gloss Checker IG-320, Horiba, Ltd., or the like.).

When the surface coating layer 2 is a layer coated with the resin film, the can body 1 and the surface coating layer 2 may be bonded to each other by using an adhesive. As the adhesive, a transparent one or a colored one may be used. For example, as the adhesive, an acrylic resin-based adhesive, a urethane resin-based adhesive, a polyester resin-based adhesive, or the like may be used. As an example, it is preferable for the polyester resin-based adhesive that the polyester resin is used as a base resin and any of a phenolic resin, an amino resin, and an isocyanate resin is used as a curing agent.

By the varnish, which is contained in the surface coating layer 2, not containing the leveling agent, surface free energy of the surface of the surface coating layer 2 may be 30 mJ/m$^2$ or more and 50 mJ/m$^2$ or less at the temperature of 25°C. In addition, by the surface coating layer 2 being a layer coated with the resin film, the surface free energy of the surface of the surface coating layer 2 may be 30 mJ/m$^2$ or more and 50 mJ/m$^2$ or less at the temperature of 25°C. By the surface free energy of the surface of the surface coating layer 2 being within the range described above, it is possible to prevent the ink from being repelled even when the printing is performed on the surface coating layer 2. When the surface free energy of the surface of the surface coating layer 2 is less than 30 mJ/m$^2$ at a temperature of 25 °C, it is difficult for the surface to be wet, and therefore the ink may be repelled and the image quality may be deteriorated. When the surface free energy of the surface of the surface coating layer 2 exceeds 50 mJ/m$^2$ at the temperature of 25 °C, the surface is easily wet, and therefore the ink may easily bleed and the image quality may deteriorate. The surface free energy of the surface of the surface coating layer 2 may be adjusted by using flame treatment, plasma treatment, corona treatment, ITRO treatment, or the like.

The surface free energy of the surface of the surface coating layer 2 can be calculated based on the contact angle that is measured in accordance with JIS R 3257: 1999 (IEC62073) by using the contact angle meter. Specifically, the surface free energy can be measured by the procedure described above.

By the varnish, which is contained in the surface coating layer 2, not containing the leveling agent, a coefficient of dynamic friction of the surface of the surface coating layer 2 may be 0.30 or less. In addition, by the surface coating layer 2 being the layer coated with the resin film, the coefficient of dynamic friction of the surface of the surface coating layer 2 may be 0.30 or less. By the coefficient of dynamic friction of the surface of the surface coating layer 2 being within the range described above, it is possible to prevent the ink from being repelled even when the printing is performed on the surface coating layer 2. In a case where the coefficient of dynamic friction of the surface of the surface coating layer 2 exceeds 0.30, slipperiness with respect to the processing tool deteriorates during the necking, a load during molding is unevenly applied to a processed portion, and buckling of the can barrel portion 200 may occur. In addition, in a case where the coefficient of dynamic friction on the surface of the surface coating layer 2 exceeds 0.30, the slipperiness with respect to a conveyance guide or the adjacent can container 50 deteriorates when the can container is conveyed, and clogging or poor flowing may occur in a production line of the can container 50 or a content filling line after the production line.

The coefficient of dynamic friction of the outer peripheral surface of the surface coating layer 2 may be measured in accordance with JIS K 7125: 1999. Specifically, the coefficient of dynamic friction can be measured by the procedure described above.

Thickness of the surface coating layer 2 may be 0.5 μm or more and 15 μm or less. Preferably, the thickness of the surface coating layer 2 may be 1 μm or more and 10 μm or less. More preferably, the thickness of the surface coating layer 2 may be 2 μm or more and 6 μm or less. By the thickness of the surface coating layer 2 being within the range described above, the slipperiness when the diameter reduction portion 100 is formed in the can container 50 can be secured, and the printing can be performed with the excellent image quality.

When the thickness of the surface coating layer 2 is less than 0.5 μm, it is difficult to slip on the surface of the surface coating layer 2, and thus the can container 50 may be scratched or metal powder may adhere to the can container 50 when the diameter reduction portion 100 is formed in the can container 50. When the thickness of the surface coating layer 2 exceeds 15 μm, more material is required, and thus the cost may increase to cause a need to reduce a production speed or the like, which affects productivity.

The surface coating layer 2 may be formed by applying the varnish to the outer peripheral surface of the can body 1, and baking the varnish. The varnish may be applied to all or at least a part of the outer peripheral surface of the can body 1. The baking may be performed by hot air, ultraviolet radiation, or electron beam radiation.

By providing the surface coating layer 2, it is possible to prevent the can container 50 from being scratched when the diameter reduction portion 100 is formed in the can container 50, and to prevent metal powder from adhering to a mold when the diameter of the can container 50 is reduced. In addition, when the surface coating layer 2 is the resin film, the can container 50 has an effect of excellent adhesion between the can body 1, and the print image layer 3 provided on the surface coating layer 2, by softness and flexibility of the resin of the surface coating layer 2.

In the can container 50 of the embodiment shown in Fig. 4, it is possible to prevent the can container 50 from being scratched when the diameter of the can container 50 is reduced, and to prevent metal powder from adhering to a mold when the diameter of the can container 50 is reduced. In addition, the can container 50 of the embodiment shown in Fig. 4 can have the image with the excellent image quality without repelling the ink composition when the printing is performed by using the ink composition.

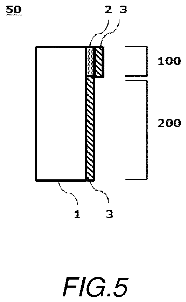

Fig. 5 shows another example of the overall layer configuration of the can container 50 in the present embodiment. The can container 50 may include the can body 1, the surface coating layer 2, and the print image layer 3 as the layer structure.

The diameter reduction portion 100 of the can container 50 may include the can body 1, the surface coating layer 2, and the print image layer 3. The can barrel portion 200 of the can container 50 may include the can body 1 and the print image layer 3.

The surface coating layer 2 may be provided on at least the diameter reduction portion 100 of the can container 50. The print image layer 3 may be a layer where the printing is performed on all or at least a part of the outer peripheral surface of the can container 50, by using the ink composition.

The can container 50 of the embodiment shown in Fig. 5 can have a smaller amount of varnish by having the minimum surface coating layer 2 required when the diameter of the can container 50 is reduced. In addition, the can container 50 of the embodiment shown in Fig. 5 can have the image with the excellent image quality without repelling the ink composition when the printing is performed by using the ink composition.

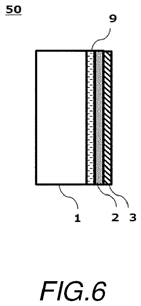

Fig. 6 shows another example of the overall layer configuration of the can container 50 in the present embodiment. The can container 50 may include the can body 1, a primer layer 9, the surface coating layer 2, and the print image layer 3.

The primer layer 9 is a base layer that enhances adhesiveness between the can body 1 and the surface coating layer 2. The primer layer 9 may be provided on all or at least a part of the outer peripheral surface of the can body 1. The primer layer 9 may be provided on at least the diameter reduction portion 100 of the can container 50. All or at least a part of the surface coating layer 2 may be provided on the primer layer 9.

The primer layer 9 may contain the resin component. The resin component may contain a thermosetting acrylic-based resin, a thermosetting epoxy-based resin, or a thermosetting polyurethane-based resin. The primer layer 9 may be formed by applying a solution obtained by dissolving the resin component in an organic solvent, and baking the solution. The solution obtained by dissolving the resin component in the organic solvent may be applied to all or at least a part of the surface of the can body 1. The baking may be performed by heating, drying, ultraviolet radiation, or electron beam radiation. It should be noted that the organic solvent can be used regardless of a type without being particularly limited. As an example, it is preferable for the polyester resin-based adhesive that the polyester resin is used as a base resin and any of a phenolic resin, an amino resin, and an isocyanate resin is used as a curing agent.

The primer layer 9 may be colorless and transparent, or may be colored with any color. The primer layer 9 may be formed by using a commercially available colored primer.

In the can container 50 of the embodiment shown in Fig. 6, by providing the primer layer 9, it is possible to enhance the adhesion between the can body 1 and the resin film of the surface coating layer 2, and it is possible to have the print image layer 3 with the excellent image quality on the surface coating layer 2. In addition, the surface coating layer 2 has the surface free energy within the range described above, and thus the can container 50 of the embodiment shown in Fig. 6 can have the image of the print image layer 3 with the excellent image quality without repelling the ink composition when the printing is performed by using the ink composition.

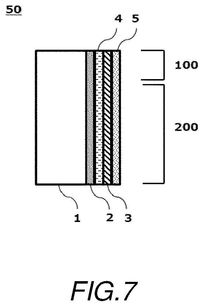

Fig. 7 shows another example of the overall layer configuration of the can container 50 in the present embodiment. The can container 50 may include the can body 1, the surface coating layer 2, a receiving layer 4, the print image layer 3, and a protective layer 5.

The receiving layer 4 is a layer that enables the inkjet printing on a material to which the inkjet printing is not possible or is difficult to perform, and is a layer that receives the ink composition contained in the print image layer 3. The surface coating layer 2, the print image layer 3, and the receiving layer 4 may be provided on all or at least a part of the outer peripheral surface of the can container 50.

The receiving layer 4 may be a swelling type receiving layer having a transparent surface, or a void type receiving layer having a whitish surface. The swelling type receiving layer is constituted by a resin that easily absorbs the ink, and by the absorbed ink swelling the resin and staying in the swelling type receiving layer, the printing is possible on the swelling type receiving layer.

The base resin contained in the swelling type receiving layer is not limited as long as the base resin is a resin that easily absorbs the ink, and may be an acrylic-based resin, a polyester-based resin, an epoxy-based resin, a vinyl-based resin, a urethane-based resin, or a blend resin of these, or the like. Among these, it is preferable to contain one or more selected from the acrylic-based resin, the polyester-based resin, the epoxy-based resin, the urethane-based resin, and the blend resin of these. A ratio of each resin in a case of the blend resin is not particularly limited, and a blend of two or three or more may be used.

In addition, the swelling type receiving layer may contain a resin other than these as long as a function is not impaired. The base resin contained in the swelling type receiving layer is preferably in a semi-cured state because the function of absorbing the ink and swelling may deteriorate in a state in which the resin is cured.

By the void type receiving layer containing an inorganic fine particle to form a void on an inside, and the ink permeating the void and staying in the void type receiving layer, the printing can be performed on the void type receiving layer. The inorganic fine particle contained in the void type receiving layer is not limited as long as the void can be formed, and may be silica, alumina, titania (titanium oxide), boron nitride, or the like. Among these, it is preferable to perform the selection from the silica and the alumina.

A particle size of the inorganic fine particles is not particularly limited, and an average primary particle size may be 10 nm or more, 50 nm or more, or may be 50 $\mu$m or less. The average primary particle size of the inorganic fine particles can be calculated from a result of measuring a particle size distribution by a particle size distribution measurement apparatus of a laser diffraction scattering type or the like; however, a catalog value may be adopted for a commercially available product.

When the receiving layer 4 is the above- described swelling type receiving layer or void type receiving layer, the ink composition may enter the receiving layer 4 when printing is performed by using the ink composition. Therefore, as shown in Fig. 7, the print image layer 3 may not be stacked on the receiving layer 4 in a layer shape.

Thickness of the receiving layer 4 is not particularly limited, and may be, for example, 0.1 $\mu$m or more and 50 $\mu$m or less. By the thickness of the receiving layer 4 being within the range described above, it is possible to appropriately receive the ink composition contained in the print image layer 3.

The receiving layer 4 may be formed by applying the solution obtained by dissolving the resin component in the organic solvent, and baking the solution. The solution obtained by dissolving the resin component in the organic solvent may be applied to all or at least a part of the surface of the surface coating layer 2. The resin component may contain a thermosetting acrylic-based resin, a thermosetting epoxy-based resin, a thermosetting polyurethane-based resin, or a thermosetting polyester-based resin. The baking may be performed by heat, air, ultraviolet radiation, or electron beam radiation. It should be noted that the organic solvent can be used regardless of a type without being particularly limited.

The receiving layer 4 may further contain a white pigment. An example of the white pigment includes titanium oxide, zinc sulfide, zinc oxide (zinc white), lithopone (a mixture of zinc sulfide and barium sulfate), or the like, and the titanium oxide is particularly preferable. By the white pigment being contained in the receiving layer 4, it is possible to more clearly recognize the image of the print image layer 3 formed on the receiving layer 4.

By additionally providing the receiving layer 4 on the surface coating layer 2, it is possible for the receiving layer 4 to firmly hold and fix the print image layer 3 provided on the receiving layer 4, and it is possible to enhance the adhesion between the surface coating layer 2 and the print image layer 3. In addition, by the receiving layer 4 being provided, the can container 50 can have the image with the excellent image quality.

In addition, the protective layer 5 is a layer that protects the print image layer 3 from an external impact or the like. The protective layer 5 may be provided on the print image layer 3. The protective layer 5 may be provided on all or at least a part of the outer peripheral surface of the can container 50.

Thickness of the protective layer 5 may be 0.5 $\mu$m or more and 15 $\mu$m or less. By the thickness of the protective layer 5 is within the range described above, the protective layer 5 can appropriately protect the print image layer 3.

The protective layer 5 may have the resin component. The protective layer 5 may be formed by applying the solution obtained by dissolving the resin component in the organic solvent, and baking the solution. The solution obtained by dissolving the resin component in the organic solvent may be applied to all or at least a part of the surface of the print image layer 3. The resin component may contain a thermosetting acrylic-based resin, a thermosetting epoxy-based resin, or a thermosetting polyester-based resin. The baking may be performed by heat, air, ultraviolet radiation, or electron beam radiation.

By additionally providing the protective layer 5 on the print image layer 3, it is possible for the protective layer 5 to protect the print image of the print image layer 3 from a deterioration due to a physical impact, oxygen, moisture, or the like, and it is possible to enhance durability of the can container 50. In addition, by the protective layer 5 being provided, it is possible to prevent a color transfer of the print image of the print image layer 3. In addition, by the protective layer 5 being provided, the can container 50 can have a smooth surface.

Only one of the receiving layer 4 and the protective layer 5 may be provided on the can container 50. Both of the receiving layer 4 and the protective layer 5 may be provided on the can container 50.

By the receiving layer 4 being provided, the can container 50 of the embodiment shown in Fig. 7 can have the image with the excellent image quality. In addition, by the protective layer 5 being provided, the protective layer 5 protects the print image of the print image layer 3, and thus the can container 50 of the embodiment shown in Fig. 7 can have enhanced durability.

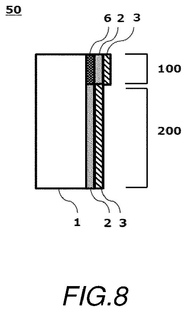

Fig. 8 shows another example of the overall layer configuration of the can container 50 in the present embodiment. The can container 50 may include the can body 1, a base image layer 6, the surface coating layer 2, and the print image layer 3.

The diameter reduction portion 100 of the can container 50 may include the can body 1, the base image layer 6, the surface coating layer 2, and the print image layer 3. The can barrel portion 200 of the can container 50 may include the can body 1, the surface coating layer 2, and the print image layer 3.

The base image layer 6 has a role as a base for stacking the print image layer 3. The base image layer 6 may be a layer where a base is formed and the printing is further performed on the base by using the ink composition, on the can body 1. The base may contain an acrylic-based resin, an epoxy-based resin, or a polyurethane-based resin, a rosin modified phenolic resin, a polyester resin, a petroleum resin, a ketone resin, a rosin modified maleic acid resin, an amino resin, or a benzoguanamine resin.

The base image layer 6 may be provided on at least the diameter reduction portion 100 of the can container 50. The surface coating layer 2 may be provided on the base image layer 6. After the surface coating layer 2 is provided on the base image layer 6, the print image layer 3 may be further provided on the surface coating layer 2. The surface coating layer 2 and the print image layer 3 may be provided on all or at least a part of the outer peripheral surface of the can container 50.

The base of the base image layer 6 may be formed by applying the solution obtained by dissolving the resin component in the organic solvent, and baking the solution. The solution obtained by dissolving the resin component in the organic solvent may be applied to all or at least a part of the surface of the can body 1. The resin component may contain a thermosetting acrylic-based resin, a thermosetting epoxy-based resin, a thermosetting polyester-based resin, or a thermosetting polyurethane-based resin. The baking may be performed by heat, air, ultraviolet radiation, or electron beam radiation.

The print of the base image layer 6 may be provided by performing solid printing. The base image layer 6 may be provided by performing pattern printing. In printing to form the base image layer 6, any single color which is white, transparent, or the like may be used for the ink composition. In printing to form the base image layer 6, a plurality of colors may be used for the ink composition.

By additionally providing the base image layer 6 on the can body 1, it is possible to obtain an effect that the image of the print image layer 3 becomes clearer. In addition, by providing the base image layer 6, it is possible to enhance decorativeness of the print image layer 3. In addition, the base image layer 6 and the print image layer 3 are in contact with each other via the surface coating layer 2, and thus the base image layer 6 and the print image layer 3 are not directly in contact with each other. Therefore, the images of the base image layer 6 and the print image layer 3 can be superimposed without the ink composition being mixed between the base image layer 6 and the print image layer 3, degrees of freedom of the printing of the can container 50 can be enhanced.

By the base image layer 6 being provided, the can container 50 of the embodiment shown in Fig. 8 can have the clearer image of the print image layer 3. In addition, the can container 50 of the embodiment shown in Fig. 8 can have enhanced decorativeness.

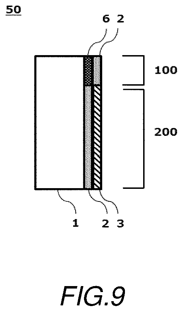

Fig. 9 shows another example of the overall layer configuration of the can container 50 in the present embodiment. The can container 50 may include the can body 1, the base image layer 6, the surface coating layer 2, and the print image layer 3.

The diameter reduction portion 100 of the can container 50 may include the can body 1, the base image layer 6, and the surface coating layer 2. The can barrel portion 200 of the can container 50 may include the can body 1, the surface coating layer 2, and the print image layer 3.

The base image layer 6 may be provided on at least the diameter reduction portion 100 of the can container 50. The surface coating layer 2 may be provided on all or at least a part of the outer peripheral surface of the can container 50. The print image layer 3 may be provided on at least the can barrel portion 200 of the can container 50.

The can container 50 of the embodiment shown in Fig. 9 has the base image layer 6 on the diameter reduction portion 100, and the print image layer 3 on the can barrel portion 200, and thus is suitable for a case where it is not necessary for the image of the base image layer 6 and the image of the print image layer 3 to be superimposed.

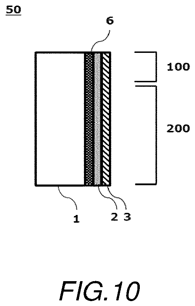

Fig. 10 shows another example of the overall layer configuration of the can container 50 in the present embodiment. The can container 50 may include the can body 1, the base image layer 6, the surface coating layer 2, and the print image layer 3. The base image layer 6, the surface coating layer 2, and the print image layer 3 may be provided on all or at least a part of the outer peripheral surface of the can container 50.

The can container 50 of the embodiment shown in Fig. 10 has the base image layer 6 and the print image layer 3 formed over the diameter reduction portion 100 and the can barrel portion 200, and thus is suitable for a case where it is desired to widely form the image on the outer peripheral surface of the can container 50.

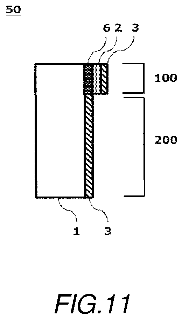

Fig. 11 shows another example of the overall layer configuration of the can container 50 in the present embodiment. The can container 50 may include the can body 1, the base image layer 6, the surface coating layer 2, and the print image layer 3.

The diameter reduction portion 100 of the can container 50 may include the can body 1, the base image layer 6, the surface coating layer 2, and the print image layer 3. The can barrel portion 200 of the can container 50 may include the can body 1 and the print image layer 3.

The base image layer 6 may be provided on at least the diameter reduction portion 100 of the can container 50. The surface coating layer 2 may be provided on at least the diameter reduction portion 100 of the can container 50.

The print image layer 3 may be provided on all or at least a part of the outer peripheral surface of the can container 50.

The can container 50 of the embodiment shown in Fig. 11 can have a smaller amount of varnish. In addition, the can container 50 of the embodiment shown in Fig. 11 can have the images of the base image layer 6 and the print image layer 3 be superimposed on the diameter reduction portion 100, and thus can have enhanced decorativeness.

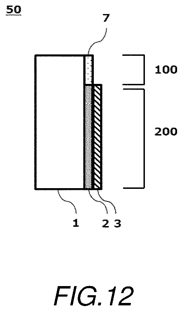

Fig. 12 shows another example of the overall layer configuration of the can container 50 in the present embodiment. The can container 50 may include the can body 1, an ink-repellent varnish layer 7, the surface coating layer 2, and the print image layer 3. The ink-repellent varnish layer 7 has a role of enhancing the slipperiness of the can container when the diameter reduction portion 100 is formed in the can container 50.

The diameter reduction portion 100 of the can container 50 may include the can body 1 and the ink-repellent varnish layer 7. The can barrel portion 200 of the can container 50 may include the can body 1, the surface coating layer 2, and the print image layer 3.

The ink-repellent varnish layer 7 may be provided on at least the diameter reduction portion 100 of the can container 50. The surface coating layer 2 and the print image layer 3 may be provided on at least the can barrel portion 200 of the can container 50. When the ink-repellent varnish layer 7 has a property of repelling the ink, the print image layer 3 may not be directly provided on the ink-repellent varnish layer 7.

An ink-repellent varnish contained in the ink-repellent varnish layer 7 may contain at least the resin component. The ink-repellent varnish may contain at least the wax component. The ink-repellent varnish may contain both of the resin component and the wax component. The ink-repellent varnish may contain, but is not limited to, a thermosetting acrylic-based resin, a thermosetting epoxy-based resin, or a thermosetting polyester-based resin as the resin component. The ink-repellent varnish may contain, but is not limited to, olefin-based hydrocarbon, paraffin-based hydrocarbon, fat and oil, a synthetic polymer-based resin, and an organic fluorine compound as the wax component.

The ink-repellent varnish contained in the ink-repellent varnish layer 7 may contain the leveling agent. For example, the ink-repellent varnish contained in the ink-repellent varnish layer 7 may contain an anti-foaming agent, an anti-repellent agent, a fluorine-based compound, a silicon-based compound, or the like.

By the ink-repellent varnish, which is contained in the ink-repellent varnish layer 7, containing the leveling agent, surface free energy of the surface of the ink-repellent varnish layer 7, which is calculated from the Kaelble-Uy formula based on a contact angle that is measured in accordance with JIS R 3257: 1999, may be 20 mJ/m$^2$ or less at the temperature of 25°C. Thickness of the ink-repellent varnish layer 7 may be 0.5 $\mu$m or more and 15 $\mu$m or less. By the surface free energy and the thickness of the ink-repellent varnish layer 7 being within the range described above, it is possible to secure the slipperiness when the diameter reduction portion 100 is formed in the can container 50.

The ink-repellent varnish layer 7 may be formed by applying the ink-repellent varnish to the outer peripheral surface of the can body 1, and baking the varnish. The ink-repellent varnish may be applied to all or at least a part of the outer peripheral surface of the can body 1. The baking may be performed by heat, air, ultraviolet radiation, or electron beam radiation.

The ink-repellent varnish is not suitable for forming the print image layer 3, but can impart good slipperiness to the can container 50. Accordingly, by additionally providing the ink-repellent varnish layer 7 on the can body 1, it is possible to prevent the can container 50 from being scratched when the diameter reduction portion 100 is formed in the can container 50, and to prevent metal powder from adhering to a mold when the diameter of the can container 50 is reduced.

In the can container 50 of the embodiment shown in Fig. 12, it is possible to prevent the can container 50 from being scratched when the diameter of the can container 50 is reduced, and to prevent metal powder from adhering to a mold when the diameter of the can container 50 is reduced. In addition, the can container 50 of the embodiment shown in Fig. 12 is suitable for a case where it is not necessary to form the print image layer 3 on the diameter reduction portion 100.

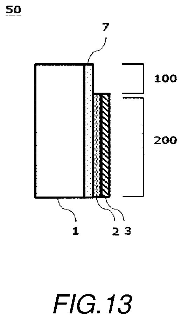

Fig. 13 shows another example of the overall layer configuration of the can container 50 in the present embodiment. The can container 50 may include the can body 1, the ink-repellent varnish layer 7, the surface coating layer 2, and the print image layer 3.

The diameter reduction portion 100 of the can container 50 may include the can body 1 and the ink-repellent varnish layer 7. The can barrel portion 200 of the can container 50 may include the can body 1, the ink-repellent varnish layer 7, the surface coating layer 2, and the print image layer 3.

The ink-repellent varnish layer 7 may be provided on all or at least a part of the outer peripheral surface of the can container 50. The surface coating layer 2 and the print image layer 3 may be formed on at least the can barrel portion 200 of the can container 50.

The can container 50 of the embodiment shown in Fig. 13 is provided with the ink-repellent varnish layer 7 and the surface coating layer 2, and thus is suitable for a case where it is desired to provide the ink-repellent varnish layer 7 and then further form the print image layer 3.

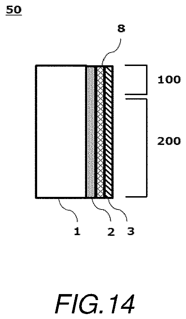

Fig. 14 shows another example of the overall layer configuration of the can container 50 in the present embodiment. The can container 50 may include the can body 1, the surface coating layer 2, an additional varnish layer 8, and the print image layer 3. The additional varnish layer 8 is a layer that has a varnish and that is formed on the surface coating layer 2 when the surface coating layer 2 is the resin film.

The additional varnish layer 8 may be provided on all or at least a part of the surface of the surface coating layer 2. For example, the additional varnish layer 8 may be provided only on the diameter reduction portion 100 of the can container 50. In addition, the print image layer 3 may be provided on at least one of the surface coating layer 2 or the additional varnish layer 8.

The varnish contained in the additional varnish layer 8 may have the same component as the varnish when the surface coating layer 2 contains the varnish. For example, the varnish contained in the additional varnish layer 8 may contain a lubricant. By the varnish contained in the additional varnish layer 8 having the same component as the varnish when the surface coating layer 2 contains the varnish, it is possible to have the image with the excellent image quality without repelling the ink composition when the printing is performed on the additional varnish layer 8 by using the ink composition.

The can container 50 of the embodiment shown in Fig. 14 has an effect of excellent adhesion between the can body 1, and the additional varnish layer 8 or the print image layer 3 provided on the surface coating layer 2, by the softness and the flexibility of the resin of the surface coating layer 2. In addition, by the additional varnish layer 8 being provided on at least the diameter reduction portion 100 of the can container 50, it is possible to prevent the can container 50 from being scratched when the diameter reduction portion 100 is formed in the can container 50.

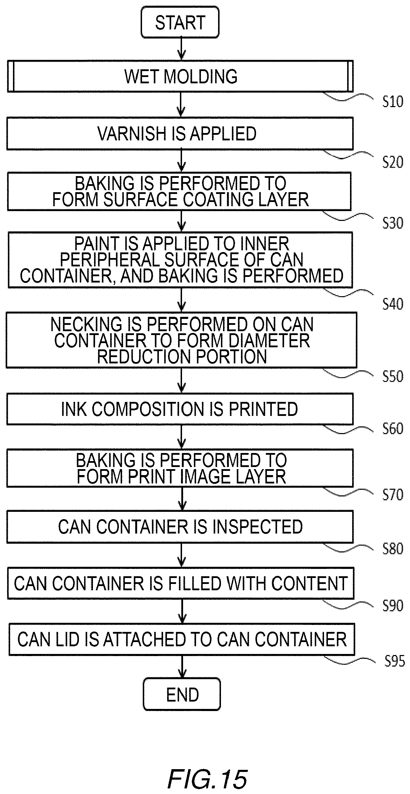

Fig. 15 is an example of a flow of manufacturing the can container 50 of the present embodiment. The can container 50 of the present embodiment can be manufactured by performing processing of S10 to processing of S95 in Fig. 15. It should be noted that for convenience of description, the processing of S10 to the processing of S95 will be described in order; however, at least some processing may be executed in parallel, and each step may be interchanged and executed within a range not deviating from the gist of the present invention.

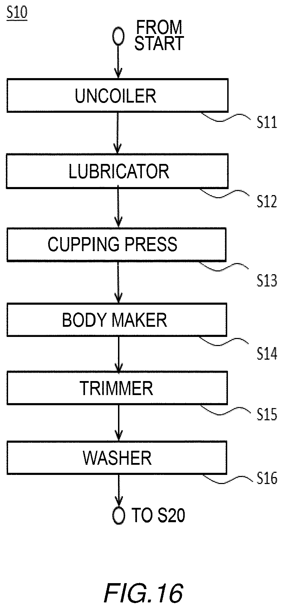

First, in S10, wet molding is performed on a metal coil material. In the wet molding, the metal coil material is punched in a cup shape, and a side wall is stretched to form the can barrel portion 200. In S 10, the wet molding includes the steps S 11 to S 16, as shown in Fig. 16.

Fig. 16 is a diagram showing S10 in the flow.

First, in S11, a step of an uncoiler is performed to unwind and stretch the metal coil material wound in a coil shape. The metal may be, but is not limited to, aluminum or steel.

Next, in S12, a step of a lubricator is performed to apply the lubricant to the metal material. The lubricant may be a lubricating agent. As the lubricating agent, a known lubricating agent can be used.

Next, in S13, a step of a cupping press is performed to punch the metal material into a cup shape, and form a material of a cup shape.

Next, in S14, a step of a body maker is performed to perform drawing on the material of the cup shape by using a coolant, stretch the can barrel thinly, and perform molding of the bottom portion. The coolant may be a lubricating agent. As the 1 lubricating agent, a known lubricating agent can be used.

Next, in S15, a step of a trimmer is performed to cut out an unnecessary portion from the material of the cup shape, and adjust a height.

Next, in S16, a step of a washer is performed to wash and dry the material of the cup shape, and remove the applied coolant or the like. The washed and dried material of the cup shape is referred to as the can body 1. For the can body 1, processing proceeds to the step of S20.

Next, in S20, the varnish is applied to at least a part of the outer peripheral surface of the can body 1. The varnish may contain at least the resin component. The varnish may contain at least the wax component. The varnish may contain both of the resin component and the wax component. The varnish may not contain the leveling agent.

The resin component may contain, but is not limited to, a thermosetting acrylic-based resin, a thermosetting epoxy-based resin, or a thermosetting polyester-based resin. The wax component may contain, but is not limited to, olefin-based hydrocarbon, paraffin-based hydrocarbon, fat and oil, a synthetic polymer-based resin, and an organic fluorine compound. The varnish can be applied to the can body 1 by a known method. The can body 1 on which the varnish is applied is referred to as the can container 50.

Next, in S30, the baking is performed on the can container 50 to form the surface coating layer 2. The baking can be performed by a known method. For example, the baking may be performed by the hot air drying. As an example, the baking can be performed at a heating temperature of 170°C to 215°C under a condition of approximately 0.5 minutes to 3 minutes.

By the varnish not containing the leveling agent, the surface free energy of the surface coating layer 2 at the temperature of 25°C, which is calculated from the Kaelble-Uy formula based on a contact angle that is measured in accordance with JIS R 3257: 1999, may be 30 mJ/m$^2$ or more and 50 mJ/m$^2$ or less. By the varnish not containing the leveling agent, the coefficient of dynamic friction of the surface of the surface coating layer 2, which is measured in accordance with JIS K 7125: 1999, may be 0.30 or less. The thickness of the surface coating layer 2 may be 0.5 $\mu$m or more and 15 $\mu$m or less.

Next, in S40, a paint is applied to an inner peripheral surface of the can container 50, and baking is performed. By performing coating of the paint on the inner peripheral surface of the can container 50, scratches are less likely to occur on the inner peripheral surface. As the paint, a known paint may be used. The paint may be applied by using spray painting. The baking can be performed by a known method. For example, the baking may be performed by the hot air drying.

Next, in S50, the necking is performed on the can container 50 to form the diameter reduction portion 100. The necking can be performed by a known method. For example, the necking may be performed by a method described in Japanese Patent Publication No. 2748856 or Japanese Patent Publication No. 2705571.

For example, by the necking, the diameter of at least a part of the portion, where the surface coating layer 2 of the can container 50 is formed, may be reduced to form the diameter reduction portion 100. At this time, the surface coating layer 2 is provided on at least the diameter reduction portion 100. For example, by the necking, the diameter of at least a part of the portion, where the base image layer 6 of the can container 50 is formed, may be reduced to form the diameter reduction portion 100. At this time, the base image layer 6 is provided on at least the diameter reduction portion 100. For example, by the necking, the diameter of at least a part of the portion, where the ink-repellent varnish layer 7 of the can container 50 is formed, may be reduced to form the diameter reduction portion 100. At this time, the ink-repellent varnish layer 7 is provided on at least the diameter reduction portion 100.

Following the necking, flanging may be performed on the can container 50 to form a flange for attaching the can lid. For the can container 50 on which the necking has been performed, the processing proceeds to the step of S60.

It should be noted that in the necking of S50, the lubricant may be used when necessary. In addition, in S50, by performing the atmospheric pressure plasma treatment on the surface coating layer 2 laminated with the resin film, it is possible to impart the functional group having polarity to the surface of the resin film, and enhance hydrophilicity of the resin film. In addition, the atmospheric pressure plasma treatment can remove the coolant and/or the lubricant remaining on the resin film. The atmospheric pressure plasma treatment will be described below.

Next, in S60, the ink composition is printed on all or at least a part of the outer peripheral surface of the can container 50 (for example, the diameter reduction portion 100 or the can barrel portion 200). The printing may be performed on the surface coating layer 2. The printing may be performed by the inkjet printing. The printing may be performed by plate offset printing. As an example, the inkjet printing may be performed by a method described in Japanese Patent Publication No. 6314468.

In the inkjet printing, the ink composition may be directly ejected from an inkjet head provided in an inkjet printer to the can container. As an example, the inkjet printing may be the direct type inkjet printing in which the ink composition is directly ejected from the inkjet head provided in the inkjet printer to the can container 50. As an example, the inkjet printing may be an offset type inkjet printing in which the ink composition is directly ejected from the inkjet head provided in the inkjet printer to a blanket, and an inkjet image formed on the blanket is transferred to the can container 50.

The ink composition which is used for the printing may be, but is not limited to, a water-based ink, a solvent ink, an ultraviolet curable ink, or an electron beam curable ink. The image formed by the printing may be a color image obtained by using ink compositions of a plurality of colors. The image formed by the printing may be a monochrome image by using the ink composition of one color.

When the ink composition is printed on the can container 50, the can container 50 may be fixed to a can container holding member for the ink composition to be printed. As the can container holding member, it is possible to use a known can container holding member such as a star wheel. For example, the can container 50 may be fixed by a method described in Japanese Patent Publication No. 6124024. For example, for fixing the can container 50, the bottom portion of the can container 50 may be fixed to the can container holding member by chucking. As an example, for the can container 50, the bottom portion of the can container 50 may be fixed to the can container holding member by vacuum suction.

In order to stably fix the can container 50, a pressing member may be further provided, in addition to the can container holding member. By providing the pressing member, the can container 50 can be fixed more stably. In addition, by providing the pressing member, it is possible to prevent the ink composition from entering the inside of the can container 50. The pressing member may be arranged at a position where the diameter reduction portion 100 or the opening portion of the can container 50 is pressed. The pressing member may or may not cover the diameter reduction portion 100.

When the ink composition or the varnish has high irritation or sensitization to a skin, by arranging the pressing member to cover the diameter reduction portion 100, it is possible to prevent the ink composition or the varnish from being applied to the diameter reduction portion 100, and it is possible to reduce the irritation or the sensitization to the skin.

Next, in S70, the baking is performed on the can container 50, for which the printing has been performed, to form the print image layer 3. By performing the baking, the print image is fixed on the can container 50. The baking may be performed by heat drying, air drying, ultraviolet radiation, electron beam radiation, or the like. For the can container 50 on which the print image layer 3 has been formed, the processing proceeds to the step of S80.

Next, in S80, the can container 50 on which the print image layer 3 has been formed is inspected. For example, the inspection may be to check whether there is not a recess, a hole, or the like on the outer peripheral surface or the inner peripheral surface of the can container 50. For example, the inspection may be to check whether the print image of the print image layer 3 is clear.

Next, in S90, the can container 50 on which the inspection has been performed is filled with a content. For example, filling with the content may be performed by filling with a certain amount of contents by a filler (a filling machine), but the filling is not limited to this.

Next, in S95, the can lid is attached to the can container 50 that has been filled with the content. For example, the attachment of the can lid may be performed by covering the opening portion of the can container 50 with a lid by a lid seaming machine, and seaming the can container 50, but is not limited to this. In this way, it is possible to obtain the can container 50 shown in the embodiment of Fig. 4 and Fig. 5.

The steps from S10 to S50 may be performed at a can manufacturing factory. The steps from S60 to S95 may be performed by a bottler. When the step S60 and subsequent steps are performed by the bottler, the can manufacturing factory performs the steps from S10 to S50, and stores the can container 50 on which the print image layer 3 is not formed.

In this case, even when the print image for the print image layer 3 is changed, it is possible for the bottler to print a changed image on the can container 50, and thus it is possible to reduce the number of can containers 50 to be discarded. In addition, it is possible to perform a change of a design of the print image more agilely, and exercise high degrees of freedom. In addition, it is not necessary for the can manufacturing factory to store a wide variety of can containers 50 on which the printing has been performed, thereby achieving excellence in cost of storage, and it is possible to meet a need for multi-item small lot production.

It should be noted that the steps S10 to S70 may be performed at the can manufacturing factory, and the steps S80 to S95 may be performed by the bottler. It should be noted that the steps S10 to S80 may be performed at the can manufacturing factory, and the steps S90 and S95 may be performed by the bottler; however, the present invention is not limited to this. In addition, by omitting the steps S20 to S30, it is possible to obtain the can container 50 shown in the embodiment of Fig. 3.

Next, a modification example of the present embodiment is shown. The can container may be manufactured by combining a plurality of modification examples shown below.

(First Modification Example)

In the present embodiment, a flow of manufacturing the can container 50 by the wet molding is shown. In the first modification example, a flow of manufacturing the can container 50 by dry molding is shown. In the can container 50 manufactured in the first modification example, the surface coating layer 2 has a form of a film shape.

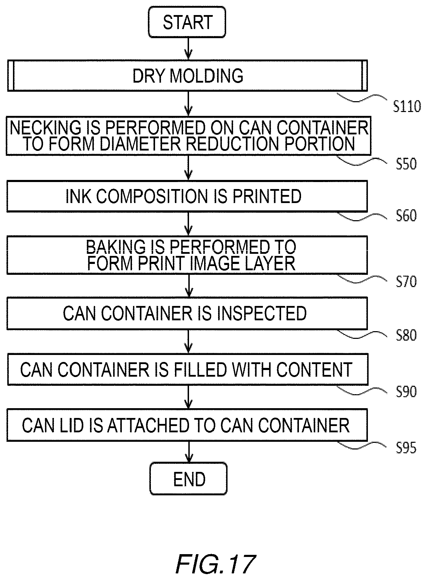

Fig. 17 is an example of a flow in which the can container 50 is manufactured by dry molding. The can container 50 of the first modification example can be manufactured by performing the processing of S 110 to the processing of S95 in Fig. 17. It should be noted that for convenience of description, the processing of S110 to the processing of S95 will be described in order; however, at least some processing may be executed in parallel, and each step may be interchanged and executed within a range not deviating from the gist of the present invention.

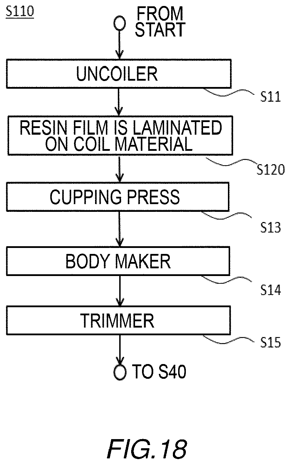

First, in S110, the dry molding is performed on the metal coil material. In the dry molding, the metal coil material is coated with the resin film, and is punched in a cup shape, and the side wall is stretched to form the can barrel portion. In S110, the dry molding includes the steps S11 to S15 as shown in Fig. 18.

Fig. 18 is a diagram showing S 110 in the flow.

First, in S11, the step of the uncoiler is performed to unwind and stretch the metal coil material wound in the coil shape. The metal may be, but is not limited to, aluminum or steel.

Next, in S120, the resin film is laminated on both sides or one side of the metal. For example, a laminator described in Japanese Patent Application Publication No. 2004-25640 may be used for laminating the resin film. The can body 1 on which the resin film is laminated is referred to as the can container 50. After finishing S 120, the processing may proceed to the step of S 13. It should be noted that before the processing proceeds to the step of S13, the lubricant may be applied to the metal laminated with the resin film, when necessary. For the steps from S13 to S15, the steps similar to the steps of the wet molding in Fig. 16 may be applied.

For the can container 50 for which the dry molding of S110 has been finished, the processing may proceed to the step of S50. In a case where the surface coating layer 2 is formed by the step of S110, by coating the metal coil material with the resin film, it is possible to enhance the slipperiness of the can container 50 without applying the varnish, and to prevent the surface from being scratched when the can container 50 is processed. In addition, it is possible to form the diameter reduction portion 100 without applying the varnish, and thus it is possible to omit a step of washing away the varnish (for example, the step of S 16 for the wet molding) after the necking, and it is possible to reduce water consumption. By performing the flow of Fig. 17, it is possible to obtain the can container 50 shown in the embodiment of Fig. 4 or the like.

(Second Modification Example)

In the present embodiment, the surface coating layer 2 is formed on all or at least a part of the outer peripheral surface of the can body 1. In the second modification example, the base image layer 6 is formed on all or at least a part of the outer peripheral surface of the can body 1, and then the surface coating layer 2 is formed.

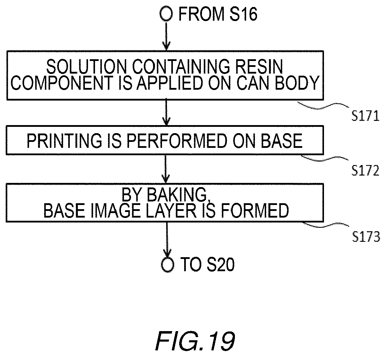

Fig. 19 shows a step of forming the base image layer 6 on all or at least a part of the outer peripheral surface of the can body 1, after S16 is performed before the processing proceeds to the step of S20.

In S171, the solution obtained by dissolving the resin component in the organic solvent may be applied on all or at least a part of the outer peripheral surface of the can body 1 on which the wet molding has been performed. The resin component may contain a thermosetting acrylic-based resin, a thermosetting epoxy-based resin, or a thermosetting polyurethane-based resin. The solution obtained by dissolving the resin component in the organic solvent may be formed on the surface of at least a portion of the can body 1 where the diameter is reduced. The baking is performed on the applied resin component to form the base. The baking can be performed by a known method.

Next, in S172, the printing is performed on the base by using the ink composition. The printing may be solid printing or pattern printing. The pattern may be a stripe pattern or a gradation pattern. The color of the print may be colorless and transparent, or may be white. The printing color may be a single color other than white, or may be a plurality of colors.

Next, in S173, by the printed ink composition being baked, the base image layer 6 is formed. The baking can be performed by a known method. The can body 1 on which the base image layer 6 is formed is referred to as the can container 50.

By additionally performing the steps S171 to S173, as shown in the embodiments of Fig. 8, Fig. 9, and Fig. 11, it is possible to obtain the can container 50 having the base image layer 6 formed only on the diameter reduction portion 100. In addition, by additionally performing the steps S171 to S173, as shown in the embodiment of Fig. 10, it is possible to obtain the can container 50 having the base image layer 6 formed on the diameter reduction portion 100 and the can barrel portion 200. For these can containers 50, the processing proceeds to step of S20. In S20, the varnish for forming the surface coating layer 2 may be applied on the base image layer 6.

It should be noted that in the first modification example, the base image layer 6 may be formed, by the method described above, on the can body 1 for which the dry molding of S110 has been finished, before the processing proceeds to the step of S50. In this case, the processing may proceed to the step of S50 for the can body 1 (that is, the can container 50) on which the base image layer 6 has been formed.

(Third modification example)

In the present embodiment, the inner peripheral surface of the can body 1 is painted and baked, and then the surface coating layer 2 is formed on all or at least a part of the outer peripheral surface. In the third modification example, the inner peripheral surface of the can body 1 is painted and baked, and then the primer layer 9 is formed.

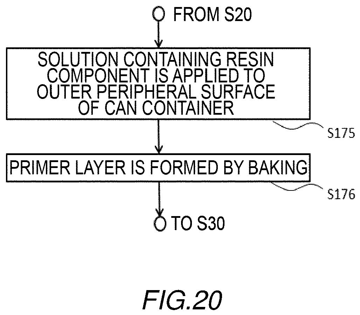

Fig. 20 shows a step of forming the primer layer 9 on all or at least a part of the outer peripheral surface of the can container 50, after the step of S20 is performed, before the processing proceeds to the step of S30 in the present embodiment.

First, in S175, the solution obtained by dissolving the resin component in the organic solvent is applied to all or at least a part of the outer peripheral surface of the can container 50. The resin component may contain a thermosetting acrylic-based resin, a thermosetting epoxy-based resin, or a thermosetting polyurethane-based resin. The primer layer 9 may be formed on at least a portion of the can container 50 where the diameter is reduced later.

Next, in S176, the primer layer 9 is formed by baking the can container 50 to which the resin component has been applied. The baking may be performed by heating, drying, ultraviolet radiation, or electron beam radiation. The primer layer 9 may be colorless and transparent, or may be colored with any color. By additionally performing the steps of S21 and S22, it is possible to obtain the can container 50 shown in the embodiment of Fig. 6. After the primer layer 9 is formed, the processing proceeds to step of S30. After that, all or at least a part of the primer layer 9 may be coated with the resin film.

It should be noted that as described in the first modification example, the primer layer 9 may be formed between a coil and all or at least a part of the resin film. In this case, in the first modification example, before the processing proceeds to the step of S120, the steps similar to S175 and S176 are additionally performed on the coil to form the primer layer 9, and the processing may proceed to the step of S120 for the coil and the resin film to be laminated.

By the primer layer 9 being provided on the can container 50, it is possible to enhance the adhesion between the can body 1 and the surface coating layer 2, and it is possible to have the print image layer 3 with the excellent image quality on the surface coating layer 2. In addition, the surface coating layer 2 has the surface free energy within the range described above, and thus it is possible to have the image of the print image layer 3 with the excellent image quality without repelling the ink composition when the printing is performed by using the ink composition.

(Fourth Modification Example)

In the present embodiment, the surface coating layer 2 is formed on all or at least a part of the outer peripheral surface of the can body 1. In the fourth modification example, the ink-repellent varnish layer 7 is formed on all or at least a part of the outer peripheral surface of the can body 1, and then the surface coating layer 2 is formed.

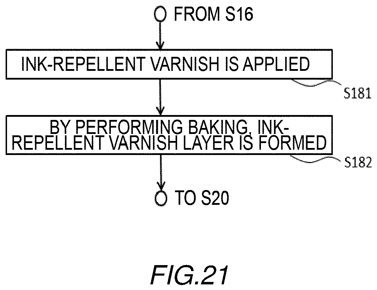

Fig. 21 shows a step of forming the ink-repellent varnish layer 7 on all or at least a part of the outer peripheral surface of the can body 1 on which S16 has been performed, before the processing proceeds to the step of S20.

In S181, the ink-repellent varnish having the resin component and the wax component may be applied to the outer peripheral surface of at least a portion of the can body 1 where the diameter is reduced.

Next, in S182, by performing the heating, the drying, the ultraviolet radiation or the electron beam radiation, the ink-repellent varnish layer 7 may be formed on the can body 1. By the ink-repellent varnish containing the leveling agent, surface free energy of the surface of the ink-repellent varnish layer 7, which is calculated from the Kaelble-Uy formula based on a contact angle that is measured in accordance with JIS R 3257: 1999, may be 20 mJ/m$^2$ or less at the temperature of 25°C.

As the ink-repellent varnish, a commercially available varnish can be used. The ink-repellent varnish may contain, but is not limited to, a thermosetting acrylic-based resin, a thermosetting epoxy-based resin, or a thermosetting polyester-based resin as the resin component. The wax component may contain, but is not limited to, olefin-based hydrocarbon, paraffin-based hydrocarbon, fat and oil, a synthetic polymer-based resin, and an organic fluorine compound. The ink-repellent varnish may contain the leveling agent. The can body 1 on which the ink-repellent varnish layer is formed is referred to as the can container 50.

By additionally performing the steps of S181 and S182, as shown in the embodiments of Fig. 12, it is possible to obtain the can container 50 having the ink-repellent varnish layer 7 formed only on the diameter reduction portion 100. In addition, by additionally performing the steps of S181 and S182, as shown in the embodiments of Fig. 13, it is possible to obtain the can container 50 having the ink-repellent varnish layer 7 formed on the diameter reduction portion 100 and the can barrel portion 200. For these can containers, the processing proceeds to step of S20. In S20, the varnish for forming the surface coating layer 2 may be applied on the ink-repellent varnish layer 7.

(Fifth Modification Example)

In the embodiment of the first modification example, the can body 1 is manufactured by the dry molding, and the surface coating layer 2 with the form of the resin film shape is formed on the outer peripheral surface of the can body 1. In the fifth modification example, the additional varnish layer 8 is further formed on all or at least a part of the surface coating layer 2 with the form of the resin film shape.

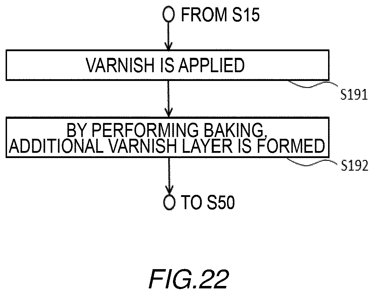

Fig. 22 shows a step of applying varnish to all or at least a part of the outer peripheral surface of the can body 1 on which S15 of dry molding in S110 has been performed, to form the additional varnish layer 8, before the processing proceeds to the step of S20.

In S191, the varnish having the resin component and the wax component may be applied to the outer peripheral surface of at least a portion of the can body 1 where the diameter is reduced. The varnish may have the same component as the varnish contained in the surface coating layer 2.

Next, in S192, by performing the baking by the heating, the drying, the ultraviolet radiation, the electron beam radiation, or the like, the additional varnish layer 8 may be formed on the can body 1. The can body 1 on which the additional varnish layer 8 is formed is referred to as the can container 50.

By additionally performing the steps of S191 and S192, as shown in the embodiments of Fig. 14, it is possible to obtain the can container 50 having the additional varnish layer 8 formed on the diameter reduction portion 100 and the can barrel portion 200. For the can container 50, the processing proceeds to step of S50.

(Sixth Modification Example)

In the present embodiment, the print image layer 3 is formed on all or at least a part of the surface coating layer 2 of the can container 50. In the sixth modification example, the receiving layer 4 is formed on all or at least a part of the surface coating layer 2, and then the print image layer 3 is formed.

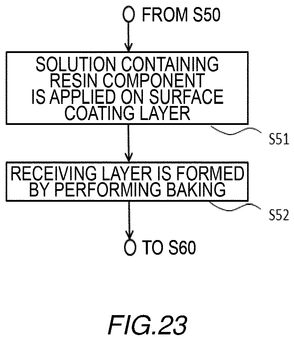

Fig. 23 shows a step of forming the receiving layer 4 on all or at least a part of the outer peripheral surface of the can container 50 having the diameter reduction portion 100 formed in S50, before the processing proceeds to the step of S60. The receiving layer 4 may be formed on at least the diameter reduction portion 100 of the can container 50. The receiving layer 4 may be formed on at least the surface coating layer 2 of the can container 50.

In S51, on the surface coating layer 2 of the can container 50, the solution obtained by dissolving the resin component in the organic solvent is applied to all or at least a part of the surface of the surface coating layer 2.

Next, in S52, the receiving layer 4 may be formed by baking the can container 50 to which the solution obtained by dissolving the resin component in the organic solvent has been applied. The resin component may contain a thermosetting acrylic-based resin, a thermosetting epoxy-based resin, a thermosetting polyurethane-based resin, or a thermosetting polyester-based resin. The thickness of the receiving layer 4 may be 0.1 $\mu$m or more and 50 $\mu$m or less. The baking may be performed by heat, air, ultraviolet radiation, electron beam radiation, or the like.

By additionally performing the steps of S51 and S52, as shown in the embodiments of Fig. 7, it is possible to obtain the can container 50 having the receiving layer 4 formed on the diameter reduction portion 100 and the can barrel portion 200. For the can container 50 on which the receiving layer 4 has been formed, the processing proceeds to the step of S60.

(Seventh modification example)

In the present embodiment, the ink composition is printed on the can container 50 on which the surface coating layer 2 has been formed, to form the print image layer 3. In the seventh modification example, at least a part of the wax component contained in the surface coating layer 2 is evaporated, before the ink composition is printed on the surface coating layer 2.

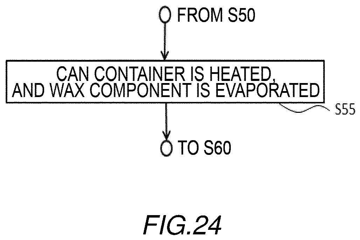

Fig. 24 shows step S55 of heating the can container 50 having the diameter reduction portion 100 formed in S50, and evaporating at least a part of the wax component contained in the surface coating layer 2, before the processing proceeds to the step of S60.

In S55, heat treatment may be performed at 170°C to 215°C under a condition of 0.5 minutes to 10 minutes. By the varnish not containing the leveling agent, the surface free energy of the surface of the can container 50 at the temperature of 25°C, after at least a part of the wax component is evaporated, which is calculated from the Kaelble-Uy formula based on a contact angle that is measured in accordance with JIS R 3257: 1999, may be 30 mJ/m$^2$ or more and 50 mJ/m$^2$ or less. By evaporating the wax component, it is possible to prevent the ink from being repelled when the printing is performed on the surface coating layer 2. For the can container 50 in which at least a part of the wax component has been evaporated, the processing proceeds to the step of S60.

It should be noted that in the fifth modification example, when the additional varnish layer 8 is formed on all or at least a part of the surface coating layer 2, the treatment similar to the above description may be performed to evaporate at least a part of the wax component contained in the additional varnish layer 8.

(Eighth Modification Example)

In the present embodiment, the ink composition is printed on the can container 50 on which the surface coating layer 2 has been formed, to form the print image layer 3. In the eighth modification example, at least a part of the wax component contained in the surface coating layer 2 is removed by the washing, before the ink composition is printed on the surface coating layer 2.

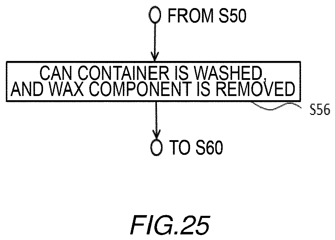

Fig. 25 shows step S56 of washing the can container 50 having the diameter reduction portion 100 formed in S50, and removing at least a part of the wax component contained in the surface coating layer 2, before the processing proceeds to the step of S60.

In S56, the washing may be washing with water. By the varnish not containing the leveling agent, the surface free energy of the surface of the can container 50 at the temperature of 25°C, after at least a part of the wax component is removed, which is calculated from the Kaelble-Uy formula based on a contact angle that is measured in accordance with JIS R 3257: 1999, may be 30 mJ/m$^2$ or more and 50 mJ/m$^2$ or less. By removing the wax component, it is possible to prevent the ink from being repelled when the printing is performed on the surface coating layer 2. For the can container 50 in which at least a part of the wax component has been removed, the processing proceeds to the step of S60.

It should be noted that in the fifth modification example, when the additional varnish layer 8 is formed on all or at least a part of the surface coating layer 2, the treatment similar to the above description may be performed to remove, by the washing, at least a part of the wax component contained in the additional varnish layer 8.

(Ninth Modification Example)

In the present embodiment, the print image layer 3 is formed on the can container 50. In the ninth modification example, the protective layer 5 is further formed on all or at least a part of the print image layer 3 of the can container 50.

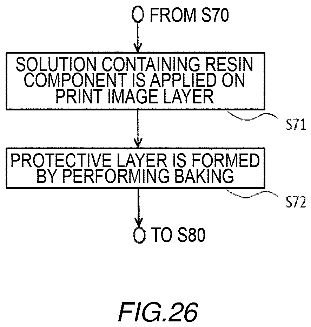

Fig. 26 shows a step of forming the protective layer 5 having the resin component on the can container 50 on which the print image layer 3 has been formed, before the processing proceeds to the step of S80.

In S71, the solution obtained by dissolving the resin component in the organic solvent is applied to all or at least a part of the surface of the print image layer 3. The resin component may contain a thermosetting acrylic-based resin, a thermosetting epoxy-based resin, or a thermosetting polyester-based resin.

Next, in S72, the protective layer 5 may be formed on the can container 50 by baking the can container 50 to which the solution obtained by dissolving the resin component in the organic solvent has been applied. The baking may be performed by heat, air, ultraviolet radiation, electron beam radiation, or the like. The thickness of the protective layer 5 may be 0.5 μm or more and 15 μm or less.

By additionally performing the steps of S71 and S72, as shown in the embodiments of Fig. 7, it is possible to obtain the can container 50 having the protective layer 5 formed on the diameter reduction portion 100 and the can barrel portion 200. For the can container 50 on which the protective layer 5 has been formed, the processing proceeds to the step of S80.

(Tenth Modification Example)

In the present embodiment, the ink composition is printed on the can container 50 on which the diameter reduction portion 100 has been formed, to form the print image layer 3, and then the can container 50 is filled with the content. In the tenth modification example, the can container 50 on which the diameter reduction portion 100 has been formed, is filled with the content, and then the ink composition is printed to form the print image layer 3. That is, unlike the present embodiment, in the tenth modification example, the can container 50 is first filled with the content, and then the ink composition is printed on the can container 50.

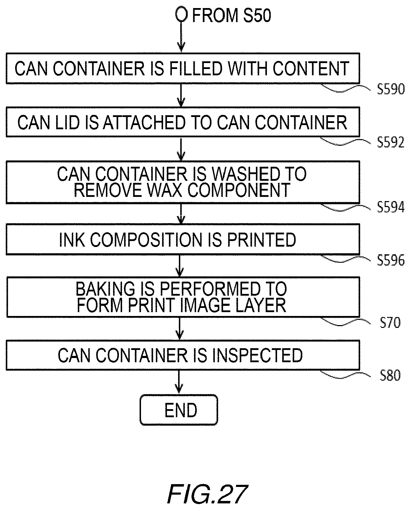

Fig. 27 is an example of a step in which in the tenth modification example, that is, in the step of S50 of the present embodiment of Fig. 15, or S50 of the first modification example of Fig. 17, after the diameter reduction portion 100 is formed in the can container 50, the can container 50 is filled with the content, and then the ink composition is printed on the can container 50.

First, in S590, the can container 50 is filled with the content. For example, filling with the content may be filling with a certain amount of contents by the filler (the filling machine), but the filling is not limited to this.

Next, in S592, the can lid is attached to the can container 50. For example, the attachment of the can lid may be performed by covering the opening portion of the can container 50 with the lid by the lid seaming machine, and seaming the can container 50, but is not limited to this.

Next, in S594, the can container 50 to which the can lid is attached is washed to remove the wax component. The washing may be performed similarly to that in S56, and may be, for example, washing with water. By removing the wax component by the washing, it is possible to prevent the ink from being repelled when the printing is performed on the surface coating layer 2. It should be noted that the step of S594 may be omitted, and instead of the washing, the wax component may be removed by heating the can container 50 (for example, retort sterilization treatment of heating at 125°C for 30 minutes, or pasteurization of heating and sterilizing at 65°C for 10 minutes, or the like) by the step similar to that of S55.

Next, in S596, the ink composition is printed on the can container 50. The step of S596 may be performed similarly to that of S60. After that, the steps S70 and S80 are performed on the can container 50 on which the ink composition has been printed. By performing these steps as well, it is possible to obtain the can container 50 shown in the embodiments of Fig. 4 and Fig. 5. It should be noted that the protective layer 5 may be formed on the can container 50 by additionally performing the steps S71 and S72 after S70.

The can container 50 of the tenth modification example is filled with the content, and then the ink composition is printed to form the print image layer 3, and thus even after the content is filled, it is possible to respond, according to circumstances, to the change or the like of the pictorial pattern or the design which is formed on the print image layer 3, and high agility is achievd, which is convenient.

(Eleventh Modification Example)

In the present embodiment, the ink composition is printed on the can container 50 on which the diameter reduction portion 100 has been formed, to form the print image layer 3. In the eleventh modification example, the atmospheric pressure plasma treatment is performed on the can container 50 on which the diameter reduction portion 100 has been formed, and then the ink composition is printed on the can container 50.

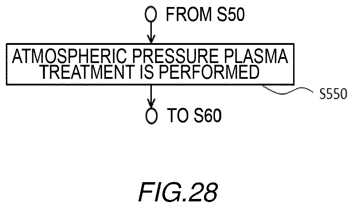

Fig. 28 is an example of a step of performing an atmospheric pressure plasma treatment.

In S550, the atmospheric pressure plasma treatment is performed on the can container 50. By the atmospheric pressure plasma treatment, it is possible to impart the functional group having polarity to the surface of the base material, and enhance hydrophilicity of the base material. The functional group having polarity may be, but is not limited to, a hydroxyl group, a carbonyl group, a carboxyl group, an amino group, or the like. Here, in a case where the step of S30 is omitted, even when the step of washer in S16 is performed but a very small amount of lubricants (the step of S12) and coolants (the step of S14) still remain, it is possible to remove these by the atmospheric pressure plasma treatment. In addition, when the step of S30 is performed, the wax component contained in the surface coating layer 2 can be removed by the atmospheric pressure plasma treatment.

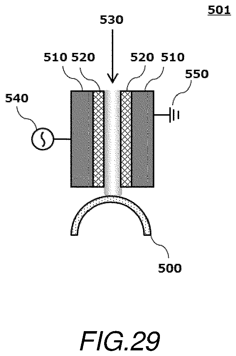

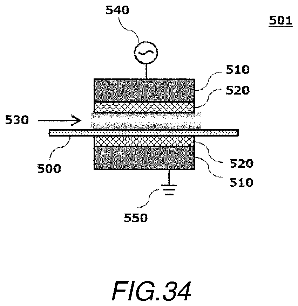

For the atmospheric pressure plasma treatment, there are two types in which one is a remote method of blowing, by a gas flow, plasma generated between electrodes to at least a part of the surface, shown in Fig. 29, and the other is a direct method of directly radiating the plasma generated between the electrodes to at least a part of the surface, shown in Fig. 34. By performing the atmospheric pressure plasma treatment, the surface free energy of the outer peripheral surface of the can body 1 or the surface of the surface coating layer 2 can be set to 30 mJ/m$^2$ or more and 50 mJ/m$^2$ or less at the temperature of 25°C.

Fig. 29 shows an example of the atmospheric pressure plasma treatment by a remote method. A plasma treatment apparatus 501 is constituted by a pair of electrodes 510, a pair of dielectrics 520, a power supply 540, and a ground 550. The remote method is a method in which plasma generated between the two electrodes 510 is carried on a gas flow 530 and blown onto a surface of a base material 500. The base material 500 may be all or at least a part of the outer peripheral surface of the can body 1 or the surface coating layer 2 in the can container 50. The outer peripheral surface of the can body 1 or the surface of the surface coating layer 2, to which the gas flow 530 is blown, may be a curved surface or a polyhedral surface. A minimum value of a distance between the surface of the base material 500 and the electrode 510 may be 50 mm or less. Preferably, the minimum value of the distance between the surface of the base material 500 and the electrode 510 may be 2 mm or less.

When a length (a height) from the opening portion to the bottom portion of the can container 50 is longer than a length of the electrode 510 (a length in a depth direction of a paper plane in Fig. 29), a plurality of electrodes 510 may be installed side by side for one can container 50. In this case, the plurality of electrodes may be arranged in a straight line in a row side by side along a length direction of the can container 50. When the plurality of electrodes 510 are installed, the plurality of electrodes may be arranged in a staggered pattern. It may be possible to control the distance between the electrode 510 and the surface of the base material 500. For example, for the electrode 510, the distance between the surface of the base material 500 and the electrode 510 may be controlled according to unevenness of the surface of the base material 500. By controlling the distance between the surface of the base material 500 and the electrode 510, it is possible to perform the atmospheric pressure plasma treatment as closely as possible to the surface of the base material 500, and it is possible to enhance efficiency of the atmospheric pressure plasma treatment.

As a condition of the atmospheric pressure plasma treatment by the remote method, a type of gas may be at least one of nitrogen, hydrogen, helium, argon, and oxygen. A flow rate of the gas may be 1 L to 200 L per minute. A treatment speed of the atmospheric pressure plasma treatment may be 1 m to 100 m per minute. A radiation time of the plasma may be 0.5 seconds to 10 seconds.

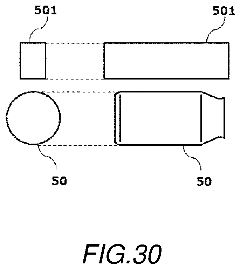

Fig. 30 shows an example of an installation of the atmospheric pressure plasma treatment apparatus by the remote method in the present embodiment. A drawing on a left side is a sketch of the can container 50 as seen from a bottom surface side, and a drawing on a right side is a sketch of the can container 50 as seen from an outer peripheral surface side. The plasma treatment apparatus 501 is installed, and the atmospheric pressure plasma treatment is performed on the outer peripheral surface of the can container 50 by the remote method. The atmospheric pressure plasma treatment of the embodiment shown in Fig. 30 is suitable for a case where the length from the opening portion to the bottom portion of the can container 50 is short. In addition, the treatment is possible by the one plasma treatment apparatus, thereby achieving excellence in cost.

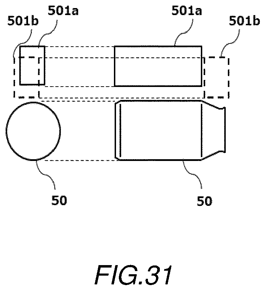

Fig. 31 shows an example of the installation of the atmospheric pressure plasma treatment apparatus by the remote method in the present embodiment. A drawing on a left side is a sketch of the can container 50 as seen from a bottom surface side, and a drawing on a right side is a sketch of the can container 50 as seen from an outer peripheral surface side. The plurality of plasma treatment apparatuses 501 are respectively installed to be close to the can barrel portion 200 and the diameter reduction portion 100 of the can container 50. Each of the plurality of plasma treatment apparatuses (501a and 501b in the drawing) performs the atmospheric pressure plasma treatment on the can container 50 by the remote method. In the atmospheric pressure plasma treatment of the embodiment shown in Fig. 31, by installing the plasma treatment apparatus 501b that performs the atmospheric pressure plasma treatment on the diameter reduction portion, it is possible to perform the atmospheric pressure plasma treatment closer to the diameter reduction portion 100 of the can container 50, and it is possible to have high treatment efficiency for the diameter reduction portion. It should be noted that although Fig. 31 shows a case where the number of plasma treatment apparatuses is two, the number of plasma treatment apparatuses may be three or more.

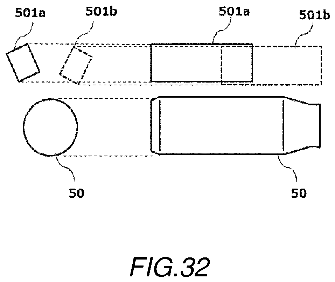

Fig. 32 shows an example of the installation of the atmospheric pressure plasma treatment apparatus by the remote method in the present embodiment. A drawing on a left side is a sketch of the can container 50 as seen from a bottom surface side, and a drawing on a right side is a sketch of the can container 50 as seen from an outer peripheral surface side. The plurality of plasma treatment apparatuses 501 are installed to be deviated from each other in the height direction of the can container 50 in a staggered and overlapping pattern. Each of the plurality of plasma treatment apparatuses (501a and 501b in the drawing) performs the atmospheric pressure plasma treatment on the can container 50 by the remote method. The atmospheric pressure plasma treatment of the embodiment shown in Fig. 32 is suitable for a case where the length from the opening portion to the bottom portion of the can container 50 is long. In addition, it is possible to simultaneously perform the treatment by the plurality of plasma treatment apparatuses (501a and 501b), and thus there is an effect of shortening a total treatment time. It should be noted that although Fig. 32 shows a case where the number of plasma treatment apparatuses is two, the number of plasma treatment apparatuses may be three or more.

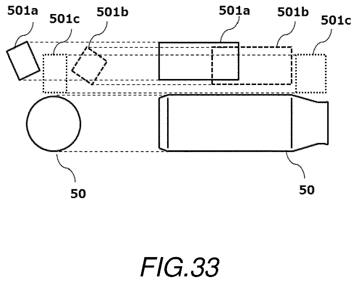

Fig. 33 shows an example of the installation of the atmospheric pressure plasma treatment apparatus by the remote method in the present embodiment. A drawing on a left side is a sketch of the can container 50 as seen from a bottom surface side, and a drawing on a right side is a sketch of the can container 50 as seen from an outer peripheral surface side. The plurality of plasma treatment apparatuses 501 are installed to be deviated from each other in the height direction of the can container 50 in a staggered and overlapping pattern. In addition, the plasma treatment apparatus 501 is installed to be also close to the diameter reduction portion 100 of the can container 50. Each of the plurality of plasma treatment apparatuses (501a, 501b, and 501c in the figure) performs the atmospheric pressure plasma treatment on the can container 50 by the remote method. The atmospheric pressure plasma treatment of the embodiment shown in Fig. 33 is suitable for the case where the length from the opening portion to the bottom portion of the can container 50 is long. In addition, it is possible to simultaneously perform the treatment by the plurality of plasma treatment apparatuses (501a, 501b, and 501c), and it is further possible to perform the atmospheric pressure plasma treatment closer to the diameter reduction portion of the can container (the plasma treatment apparatus 501c in the drawing), and thus there are effects of having high treatment efficiency for the diameter reduction portion, and shortening a total treatment time. It should be noted that although Fig. 33 shows a case where the number of plasma treatment apparatuses is three, the number of plasma treatment apparatuses may be four or more.

Fig. 34 shows an example of the atmospheric pressure plasma treatment by a direct method. The plasma treatment apparatus 501 is constituted by a pair of electrodes 510, a pair of dielectrics 520, the power supply 540, and the ground 550. The direct method is a method in which the base material 500 is passed through between the two electrodes 510, and the plasma generated between the two electrodes 510 is directly radiated to the surface of the base material 500. The base material 500 may be all or at least a part of the outer peripheral surface of the can body 1 or the surface coating layer 2. The outer peripheral surface of the can body 1 in the can container 50 may be a curved surface or a polyhedral surface. The minimum value of the distance between the surface of the base material 500 and the electrode 510 may be 50 mm or less. Preferably, the minimum value of the distance between the surface of the base material 500 and the electrode 510 may be 2 mm or less.

As a condition of the atmospheric pressure plasma treatment by the direct method, a type of gas may be at least one of nitrogen, hydrogen, helium, argon, and oxygen. A flow rate of the gas may be 1 L to 200 L per minute. A treatment speed of the atmospheric pressure plasma treatment may be 1 m to 100 m per minute. A radiation time of the plasma may be 0.5 seconds to 10 seconds.

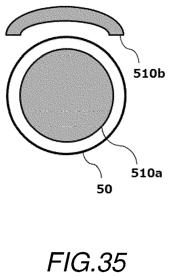

Fig. 35 shows an example of the installation of the plasma treatment apparatus by the direct method in the present embodiment. Of the two electrodes 510a, 510b of the plasma treatment apparatus, 510a may have a mandrel shape that can be inserted from the opening portion of the can container 50 to be housed inside the can container 50. In this case, the other electrode 510b is installed to be close to the outer peripheral surface of the can container 50. In the atmospheric pressure plasma treatment of the embodiment shown in Fig. 35, by one of the two electrodes 510a and 510b (510a in the drawing) having the mandrel shape, it is possible to directly radiate the plasma generated by the plasma treatment apparatus to the can container 50 having the outer peripheral surface with a curved surface or a polyhedral surface, thereby achieving excellence in treatment efficiency. After the atmospheric pressure plasma treatment, the processing proceeds to the step of S60.

(Twelfth Modification Example)

In the present embodiment, the can container 50 is filled with the content and the can lid is attached to the opening portion. In the twelfth modification example, the can container 50 (the can body 1) is the metal cup having the opening at the end portion.

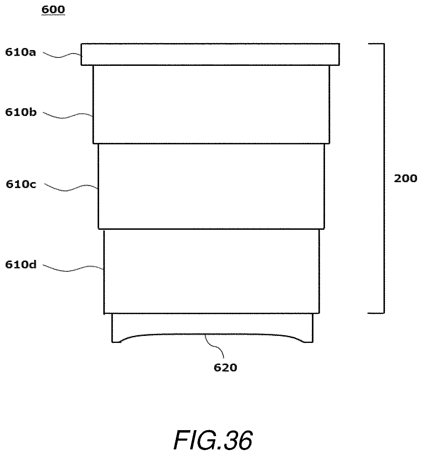

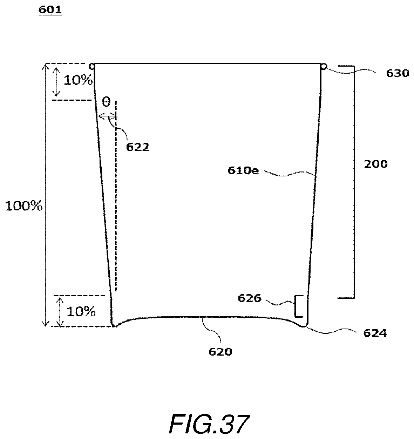

Fig. 36 and Fig. 37 are examples showing the metal cup having the opening at the end portion. The metal cups 600 and 601 having openings at end portions may have a (approximately) cylindrical shape or a truncated cone shape (a tapered shape). When the cups 600 and 601 have the truncated cone shape, one or more tapered sections (for example, a tapered section 610a to a tapered section 610d in Fig. 36, a tapered section 610e in Fig. 37) may be provided between the end portion having the opening, and the other end portion (a bottom portion). In addition, the one or more tapered sections 610a to 610e may have radii continuously increasing from the bottom portion toward the end portion having the opening. A step may be provided between adjacent tapered sections (for example, between the tapered sections 610b and the tapered sections 610c in Fig. 36). When a distance (a total height) between both end portions is set as 100%, an angle θ (a taper angle 622) between the outer peripheral surface at a position at a height of 10% from a lowermost end of the bottom portion, and the outer peripheral surface at a position at a height of 90% may be 2 degrees or more and 15 degrees or less.

The bottom portions of the metal cups 600 and 601 having the openings at the end portions may be molded into a dome shape (a dome portion 620) which protrudes toward the opening portion. shapes of cross sections of the tapered sections 610a to 610e perpendicular to the height direction may be a (approximately) circular shape, a (approximately) polygonal shape, or a shape in which a plurality of these are combined. For example, the bottom portion of the cup 601 may have an outside rising portion 624 that is stretched toward an outside and the opening portion of the cup, and may have a constriction portion 626 that forms a curved line which protrudes toward an inside of the cup between the outside rising portion 624 and the tapered section 610e.

In addition, when two metal cups 600 and 601 having the openings at the end portions are overlapped, a height by which the upper cup protrudes from the lower cup may be 4% or more and 15% or less of the total height. A peripheral edge of the end portion having the opening may be molded into a curl shape (a curl portion 630), or may be molded for a radius of curvature to gradually or continuously become small from the can barrel portion 200 toward a lowermost end portion of the curl portion 630. It is also possible to perform the atmospheric pressure plasma treatment on such metal cups 600 and 601 by the remote method or the direct method shown in the eleventh modification example. It should be noted that in the case where the can container 50 (the can body 1) is the metal cup having the opening at the end portion as well, similarly to the diameter reduction portion 100 of the can container 50 which is not a cup, the diameter reduction portion 100 may be formed such that an outer diameter gradually becomes small as one end of the can container 50 becomes close.

(Thirteenth Modification Example)

In the present embodiment, the outer peripheral surface of the can container 50 is a curved surface. In the thirteenth modification example, the outer peripheral surface of the can container 50 (the can body 1) is a polyhedral surface.

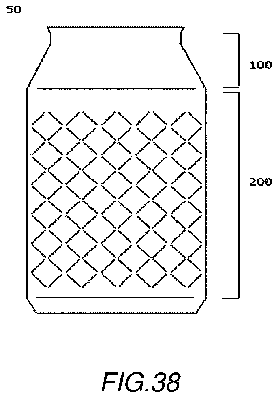

In Fig. 38, the outer peripheral surface of the can body 1 or the surface of the surface coating layer 2 is a polygon in which a shape of a cross section perpendicular to the height direction is chamfered. The outer peripheral surface of the can body 1 or the surface of the surface coating layer 2 is not limited to the polyhedral surface, and may have a (approximately) circular shape, and a shape in which a plurality of (approximately) circular shapes and chamfered polyhedral surfaces are combined. The polyhedral surface may have a shape in which polygons such as an equilateral triangle, a square, and a regular hexagon are chamfered and smoothly combined. In addition, the polyhedral surface may include a shape in which a plurality of polygonal planes arranged side by side in a circumferential direction are continuously combined. It is also possible to perform the atmospheric pressure plasma treatment on the can container 50 having such an outer peripheral surface of the polyhedral surface by the remote method or the direct method shown in the eleventh modification example. It should be noted that even when the outer peripheral surface of the can container 50 (the can body 1) is a polyhedral surface, similarly to the diameter reduction portion 100 of the can container 50 having the outer peripheral surface with a curved surface, the diameter reduction portion 100 may be formed such that an outer diameter gradually becomes small as one end of the can container 50 becomes close.

[Example]

I. A relationship between surface free energy E (mJ/m$^2$) of the surface of the surface coating layer 2 of the can container 50, and the image quality of the print image when the surface coating layer 2 of the can container 50 is a varnish layer.

Hereinafter, a result of an experiment, which is obtained by checking the relationship between the surface free energy E (mJ/m$^2$) of the surface of the surface coating layer 2 (the varnish layer) of the can container 50 and the image quality of the print image, will be specifically shown. The can container 50 obtained by performing the steps from S 10 to S50 was prepared. The can container 50, in which the surface coating layer 2 and the print image layer 3 were formed on the entire outer peripheral surface, and the base image layer 6, the receiving layer 4, the ink-repellent varnish layer 7, and the additional varnish layer 8 were not formed on the outer peripheral surface, was used. The surface free energy E of the surface coating layer 2 was measured for each of the can containers of examples 1 to 5 and comparison examples 1 to 5. The surface free energy E was measured at the temperature of 25°C by using the contact angle meter (manufactured by DropMaster DM500 manufactured by Kyowa Interface Science Co., Ltd.) in accordance with JIS R 3257: 1999. The coefficient of dynamic friction was measured by using, as a measurement machine, the heating type measurement instrument AB-550-TS (manufactured by Tester Sangyo Co., Ltd.) for the friction coefficient in accordance with JIS K7125: 1999.

Water and methylene iodide (diiodomethane) were used as a liquid of which the surface free energy is known, and the contact angle meter was used to measure the contact angle in the surface of the surface coating layer 2 of the can container 50. From the measured contact angle, the surface free energy E in the surface of the surface coating layer 2 of the can container 50 was calculated by the Kaelble-Uy formula.

Next, the print image layer 3 was formed on the surface of the surface coating layer 2 of the can container 50 by using the inkjet printing. The inkjet printing was performed by using a head manufactured by Kyocera Corporation. The baking of the ink composition printed by the inkjet printing was performed by the hot air drying. The image quality of the print image of the print image layer 3 was visually determined.

(Evaluation Criteria for Image Quality of Print Image)

O: The print image was very clear.

△: There was some unclearness in a contour part of the print image; however, it was possible to sufficiently recognize the print image.

X: The print image was unclear.

(Evaluation Criteria for Diameter Reduction Molding of Can Container)

O: The molding was easily possible.

X: The buckling of the can barrel portion occurred during the molding, and it was not possible to manufacture the can container.

[Table 1]

| POSITION | VARNISH LAYER COEFFICIENT OF DYNAMIC FRICTION | DIAMETER REDUCTION MOLDING OF CAN CONTAINER | SURFACE FREE ENERGY E $(mJ/m^2)$ | IMAGE QUALITY (dpi) | EVALUATION OF IMAGE QUALITY |
|---|---|---|---|---|---|
| EXAMPLE 1 | 0.3 | O | 30 | 600 | O |
| EXAMPLE 2 | 0.3 | O | 35 | 600 | O |
| EXAMPLE 3 | 0.3 | O | 40 | 600 | O |
| EXAMPLE 4 | 0.3 | O | 45 | 600 | O |
| EXAMPLE 5 | 0.3 | O | 50 | 600 | O |
| COMPARISON EXAMPLE 1 | 0.3 | O | 20 | 600 | × |
| COMPARISON EXAMPLE 2 | 0.3 | O | 25 | 600 | △ |
| COMPARISON EXAMPLE 3 | 0.3 | O | 55 | 600 | △ |
| COMPARISON EXAMPLE 4 | 0.3 | O | 60 | 600 | × |
| COMPARISON EXAMPLE 5 | 0.4 | × | 35 | 600 | O |

As shown in results of Table 1, by the surface free energy E of the surface of the surface coating layer 2 of the can container 50 being in the range of 30 $mJ/m^2$ or more and 50 $mJ/m^2$ or less, it was possible to provide the can container 50 including the print portion 300 having the clear print image by the inkjet printing and having the excellent image quality.

II. A relationship between the surface free energy E (mJ/m$^2$) of the surface of the can body 1 of the can container 50 or the surface coating layer 2, and the image quality of the print image when the atmospheric pressure plasma treatment is performed.

Hereinafter, a method and a result of an experiment, which is obtained by checking the relationship between the surface free energy E (mJ/m$^2$) of the surface of the can body 1 or the surface coating layer 2 of the can container 50 and the image quality of the print image, will be specifically shown. It should be noted that the method of the experiment described below is an example, and the method of the experiment method is not limited to the example.

(Example 1)

(Manufacturing of Can Body)

The wet molding was performed on an aluminum coil material (plate thickness 0.24 mm) to manufacture the can body 1. The can body was the seamless can. The height of the can body 1 was 120 mm. The inner peripheral surface of the can body 1 was coated with the paint by the spray painting.

(Formation of Surface Coating Layer)

A varnish layer having thickness of 4 $\mu$m was formed on the can body, as the surface coating layer 2. The composition of the varnish layer is as follows. The varnish was baked by the drying.

(Atmospheric Pressure Plasma Treatment)

The atmospheric pressure plasma treatment was performed on the can container by the remote method. As the plasma treatment apparatus used for the atmospheric pressure plasma treatment, one manufactured by M.D. Excimer Inc. was used. As a radiation condition for the plasma, an output was 2 MHz to 3 MHz, the gas was the nitrogen gas, the gas flow rate was 70 L per minute, the treatment speed was 10 m per minute, and the radiation time of the plasma was 3 seconds. The distance between the electrode 510 of the plasma treatment apparatus and the surface of the can container 50 was 50 mm.

(Measurement of Surface Free Energy)

The surface free energy E of the surface coating layer (the varnish layer) was measured. The surface free energy E was measured at the temperature of 25°C by using the contact angle meter (manufactured by DropMaster DM500 manufactured by Kyowa Interface Science Co., Ltd.) in accordance with JIS R 3257: 1999. Water and methylene iodide (diiodomethane) were used as a liquid of which the surface free energy is known, and the contact angle meter was used to measure the contact angle in the surface of the surface coating layer 2 (the varnish layer). From the measured contact angle, the surface free energy E in the surface of the surface coating layer 2 (the varnish layer) was calculated by the Kaelble-Uy formula. Values of the measured surface free energy are shown in Table 2.

(Formation of Print image Layer)

The print image layer 3 was formed on the surface of the surface coating layer 2 (the varnish layer) by the direct type inkjet printing by using the ink composition. The inkjet printing was performed by using the head manufactured by Kyocera Corporation. As the ink composition, a solvent-based ink (manufactured by Tomatec Co., Ltd.) was used. The ink composition was baked by the hot air drying. Image resolution was 600 dpi.

(Evaluation Criteria for Image Quality of Print Image)

The image quality of the print image of the print image layer 3 was visually determined. Results are shown in Table 2.

O: The print image was very clear.

△: There was some unclearness in a contour part of the print image; however, it was possible to sufficiently recognize the print image.

X: The print image was unclear.

(Example 2)

The can container was produced similarly to that in example 1 except that the distance between the electrode 510 of the plasma treatment apparatus and the surface of the can container 50 was 20 mm.

(Example 3)

The can container was produced similarly to that in example 1 except that the distance between the electrode 510 of the plasma treatment apparatus and the surface of the can container 50 was 2 mm.

(Example 4)

The can container was produced similarly to that in example 1 except that the atmospheric pressure plasma treatment was performed by the direct method and the distance between the electrode 510 of the plasma treatment apparatus and the surface of the can container 50 was 20 mm.

(Example 5)

The can container 50 was produced similarly to that in example 1 except that as the surface coating layer 2, the resin film (ester film manufactured by Toyobo Co., Ltd.) with thickness of 12 $\mu$m was coated instead of the varnish layer. The component of the resin film was polyethylene terephthalate.

(Example 6)

The can container was produced similarly to that in example 1 except that the surface coating layer 2 was not coated.

(Example 7)

The can container was produced similarly to that in example 1 except that the surface coating layer 2 was not coated and the distance between the electrode 510 of the plasma treatment apparatus and the surface of the can container 50 was 2 mm.

(Example 8)

The can container 50 was produced similarly to that in example 1 except that the distance between the electrode 510 of the plasma treatment apparatus and the surface of the can container 50 was 70 mm.

(Comparison Example 1)

The can container 50 was produced similarly to that in example 1 except that the atmospheric pressure plasma treatment was not performed.

[Table 2]

| | SURFACE COATING LAYER | ATMOSPHERIC PRESSURE PLASMA TREATMENT | DISTANCE BETWEEN ELECTRODE AND SURFACE (mm) | SURFACE FREE ENERGY E (mJ/m$^2$) | EVALUATION OF IMAGE QUALITY |
|---|---|---|---|---|---|
| EXAMPLE 1 | VARNISH LAYER | REMOTE METHOD | 50 | 30 | ○ |
| EXAMPLE 2 | VARNISH LAYER | REMOTE METHOD | 20 | 38 | ○ |
| EXAMPLE 3 | VARNISH LAYER | REMOTE METHOD | 2 | 49 | ○ |

(continued)

|  | SURFACE COATING LAYER | ATMOSPHERIC PRESSURE PLASMA TREATMENT | DISTANCE BETWEEN ELECTRODE AND SURFACE (mm) | SURFACE FREE ENERGY E (mJ/m$^2$) | EVALUATION OF IMAGE QUALITY |
|---|---|---|---|---|---|
| EXAMPLE 4 | VARNISH LAYER | DIRECT METHOD | 20 | 35 | ○ |
| EXAMPLE 5 | RESIN FILM | REMOTE METHOD | 50 | 40 | ○ |
| EXAMPLE 6 | NONE | REMOTE METHOD | 50 | 42 | ○ |
| EXAMPLE 7 | NONE | REMOTE METHOD | 2 | 50 | ○ |
| EXAMPLE 8 | VARNISH LAYER | REMOTE METHOD | 70 | 28 | △ |
| COMPARISON EXAMPLE 1 | VARNISH LAYER | NONE | NONE | 25 | × |

As shown in the result of Table 2, by performing the atmospheric pressure plasma treatment on the can container 50 such that the surface free energy E of the outer peripheral surface of the can body 1 of the can container 50 or the surface of the surface coating layer 2 is in the range of 30 mJ/m$^2$ or more and 50 mJ/m$^2$ or less, it was possible to provide the can container 50 including the print portion 300 having the clear print image by the inkjet printing and having the excellent image quality.

III. A relationship between the surface free energy E (mJ/m$^2$) of the surface of the surface coating layer 2 of the can container 50, and the image quality of the print image when the surface coating layer 2 of the can container 50 is the layer coated with the resin film.

Hereinafter, a method and a result of an experiment, which is obtained by checking the relationship between the surface free energy E (mJ/m$^2$) of the surface of the can body 1 or the resin film of the surface coating layer 2 and the image quality of the print image, will be specifically shown. It should be noted that the method of the experiment described below is an example, and the method of the experiment method is not limited to the example.

(Example 1)

(Manufacturing of Can Body)

The dry molding was performed on the aluminum coil material (plate thickness 0.24 mm) to manufacture the can body 1. The can body 1 was the seamless can. The height of the can body 1 was 120 mm.

(Coating of Resin Film)

The resin film was coated on the can body 1. As the resin film, the polyester resin (ester manufactured by Toyobo Co., Ltd.) having no structure which is derived from the isophthalic acid (IA) was used. The thickness of the resin film was 12 μm.

(Measurement of Surface Free Energy)

The surface free energy E of the resin film was measured. The surface free energy E was measured at the temperature of 25°C by using the contact angle meter (manufactured by DropMaster DM500 manufactured by Kyowa Interface Science Co., Ltd.) in accordance with JIS R 3257: 1999. Water and methylene iodide (diiodomethane) were used as a liquid of which the surface free energy is known, and the contact angle meter was used to measure the contact angle in the surface of the resin film. From the measured contact angle, the surface free energy E in the surface of the resin film was calculated by the Kaelble-Uy formula. Values of the measured surface free energy are shown in Table 3.

(Formation of Print image Layer)

The print image layer 3 was formed on the surface of the resin film by the direct type inkjet printing by using the ink composition. The inkjet printing was performed by using the head manufactured by Kyocera Corporation. As the ink composition, the solvent-based ink (manufactured by Tomatec Co., Ltd.) was used. The ink composition was baked by the hot air drying. Image resolution was 600 dpi.

(Evaluation Criteria for Image Quality of Print Image)

The image quality of the print image of the print image layer 3 was visually determined. Results are shown in Table 3.

O: The print image was very clear.

X: The print image was unclear.

(Evaluation Criteria for Neck Formability)

An appearance of the can container 50 was visually determined. Results are shown in Table 3.

O: No occurring of a neck wrinkle, a scratch, or buckling was observed in the can container.

X: One or more of any of the neck wrinkle, the scratch, and the buckling were observed in the can container.

(Evaluation Criteria for Ink Adhesion)

A film adhesion of the outer peripheral surface including the print image layer 3 of the can container 50 was determined by a grid peeling evaluation by using a cellophane tape (registered trademark, manufactured by Nichiban Co., Ltd.). Results are shown in Table 3.

◎: No peeling was observed and the adhesion was good.

O: A peeling area was 5% or less.

X: The peeled area exceeded 5%.

(Example 2)

The can container was manufactured similarly to that in example 1 except that as the resin film, the polyester resin having 8 mol% of structure which is derived from the isophthalic acid (IA) was used.

(Example 3)

The can container was manufactured similarly to that in example 1 except that as the resin film, the polyester resin having 2 mol% of structure which is derived from the isophthalic acid (IA) was used.

(Example 4)

The can container was manufactured similarly to that in example 1 except that the plasma treatment was performed on the surface of the resin film.

(Example 5)

The can container was manufactured similarly to that in example 1 except that the receiving layer 4 with thickness of 5 μm was additionally provided on the resin film.

(Comparison Example 1)

The can container was manufactured similarly to that in example 1 except that the can body 1 was not coated with the resin film.

(Comparison Example 2)

The can container was manufactured similarly to that in example 1 except that the can body 1 was not coated with the resin film and the varnish was applied to the can body 1 to provide the varnish layer.

[Table 3]

| | RESIN FILM | AMOUNT OF IA MOL% | VARNISH | PLASMA TREATMENT | RECEIVING LAYER | EVALUATION | | | | |
|---|---|---|---|---|---|---|---|---|---|---|
| | | | | | | COEFFICIENT OF DYNAMIC FRICTION | NECK FORMA-BILITY | SURFACE FREE EN-ERGY E (mJ / m2) | EVALU-ATION OF IM-AGE QUALITY | INK ADHE-SION |
| EXAMPLE 1 | PRESENT | 0 | NONE | NONE | NONE | 0.2 | ○ | 30 | ○ | ○ |
| EXAMPLE 2 | PRESENT | 8 | NONE | NONE | NONE | 0.3 | ○ | 32 | ○ | ◎ |
| EXAMPLE 3 | PRESENT | 2 | NONE | NONE | NONE | 0.2 | ○ | 30 | ○ | ○ |
| EXAMPLE 4 | PRESENT | 0 | NONE | PERFORMED | NONE | 0.2 | ○ | 40 | ○ | ○ |
| EXAMPLE 5 | PRESENT | 0 | NONE | NONE | PRESENT | 0.3 | ○ | 50 | ○ | ◎ |
| COMPARISON EXAMPLE 1 | NONE | 0 | NONE | NONE | NONE | 0.5 | × | 60 | × BLEEDING OCCURS | ○ |
| COMPARISON EXAMPLE 2 | NONE | 0 | PRESENT | NONE | NONE | 0.1 | ○ | 10 | × REPELLING OCCURS | × |

As shown in the results of Table 3, by the coefficient of dynamic friction of the surface of the resin film being 0.30 or less, it was possible to provide the can container 50 in which the neck was easily molded. In addition, by the surface free energy E of the surface of the resin film being in the range of 30 mJ/m$^2$ or more and 50 mJ/m$^2$ or less, it was possible to provide the can container 50 including the print portion 300 having the good adhesion between the resin film and the ink, showing no occurrence of bleeding or repelling, having the clear print image, and having the excellent image quality.

While the embodiments of the present invention have been described, the technical scope of the invention is not limited to the above-described embodiments. It is apparent to persons skilled in the art that various alterations and improvements can be added to the above-described embodiments. It is also apparent from the scope of the claims that the embodiments added with such alterations or improvements can be included in the technical scope of the invention.

The operations, procedures, steps, and stages of each process performed by an apparatus, system, program, and method shown in the claims, embodiments, or diagrams can be performed in any order as long as the order is not indicated by "prior to," "before," or the like and as long as the output from a previous process is not used in a later process. Even if the process flow is described using phrases such as "first" or "next" in the claims, embodiments, or diagrams, it does not necessarily mean that the process must be performed in this order.

EXPLANATION OF REFERENCES

    1 can body
    2 surface coating layer
    3 print image layer
    4 receiving layer
    5 protective layer
    6 base image layer
    7 ink-repellent varnish layer
    8 additional varnish layer
    9 primer layer
    50 can container
    100 diameter reduction portion
    200 can barrel portion
    300 print portion
    500 base material
    501 plasma treatment apparatus
    510 electrode
    520 dielectric
    530 gas flow
    540 power supply
    550 ground
    600 cup
    601 cup
    610 tapered section
    620 dome portion
    622 taper angle
    624 outside rising portion
    626 constriction portion
    630 curl portion

**Claims**

1.    A can container comprising a can body of a cylindrical shape, and at least a surface coating layer, wherein

     the surface coating layer is formed on at least a part of an outer peripheral surface of the can body,
     the surface coating layer has a resin component, and
     surface free energy of a surface of the surface coating layer is 30 mJ/m$^2$ or more and 50 mJ/m$^2$ or less at a temperature of 25°C.

2. The can container according to claim 1, wherein
the resin component has a structure which is derived from an isophthalic acid.

3. The can container according to claim 1 or 2, wherein
the resin component contains a polyester resin.

4. The can container according to any one of claims 1 to 3, wherein
for surface roughness of the surface of the surface coating layer, arithmetic average roughness (Ra) is 2 $\mu$m or less, and a maximum height (Rz) is 10 $\mu$m or less.

5. The can container according to any one of claims 1 to 4, wherein
glossiness of the surface of the surface coating layer is 100 or less.

6. The can container according to any one of claims 1 to 5, further comprising a primer layer, wherein
at least a part of the surface coating layer is provided on the primer layer.

7. The can container according to any one of claims 1 to 6, wherein
a coefficient of dynamic friction of the surface of the surface coating layer is 0.30 or less.

8. The can container according to any one of claims 1 to 7, wherein
thickness of the surface coating layer is 0.5 $\mu$m or more and 15 $\mu$m or less.

9. The can container according to any one of claims 1 to 8, wherein

the can body has a diameter reduction portion of which a diameter is reduced at one end, and a can barrel portion, and
the surface coating layer is provided on at least the diameter reduction portion.

10. The can container according to any one of claims 1 to 9, further comprising a print image layer formed on the surface coating layer.

11. A can container comprising a can body of a cylindrical shape, wherein

a print image layer is formed on at least a part of an outer peripheral surface of the can body, and
surface free energy of the outer peripheral surface of the can body is 30 mJ/m$^2$ or more and 50 mJ/m$^2$ or less at a temperature of 25°C.

12. The can container according to claim 11, wherein
the can body has a diameter reduction portion of which a diameter is reduced at one end, and a can barrel portion.

13. The can container according to any one of claims 10 to 12, further comprising a receiving layer formed on the outer peripheral surface of the can body or the surface coating layer, wherein
the print image layer is formed on the receiving layer.

14. The can container according to any one of claims 10 to 13, wherein
a protective layer having a resin component is formed on the print image layer.

15. The can container according to any one of claims 1 to 10, 13 and 14, wherein

the can body has:

a diameter reduction portion of which a diameter is reduced at one end, and a can barrel portion; and
a base image layer formed on at least the diameter reduction portion, wherein

the surface coating layer is provided on at least the base image layer.

16. The can container according to any one of claims 1 to 15, wherein

the can body has a diameter reduction portion of which a diameter is reduced at one end, and a can barrel portion,

an ink-repellent varnish layer having a resin component and a wax component is formed on at least the diameter reduction portion, and

surface free energy of a surface of the ink-repellent varnish layer is 20 mJ/m$^2$ or less at the temperature of 25°C.

17. The can container according to any one of claims 1 to 16, the can container being a metal cup having an opening at an end portion.

18. A manufacturing method for a can container that includes a can body of a cylindrical shape, and at least a surface coating layer, the manufacturing method for a can container, comprising:

forming the surface coating layer of which surface free energy is 30 mJ/m$^2$ or more and 50 mJ/m$^2$ or less at a temperature of 25°C,

by including applying a varnish having a resin component and a wax component to at least a part of an outer peripheral surface of the can body, or
by including coating at least a part of the outer peripheral surface of the can body, with a resin film; and

reducing a diameter of at least a part of a portion where the surface coating layer is formed in the can container.

19. A manufacturing method for a can container that includes a can body of a cylindrical shape, and at least a surface coating layer, the manufacturing method for a can container, comprising:

forming the surface coating layer of which surface free energy is 30 mJ/m$^2$ or more and 50 mJ/m$^2$ or less at a temperature of 25°C,

by including applying a varnish having a resin component and a wax component to at least a part of an outer peripheral surface of the can body, or
by including coating at least a part of the outer peripheral surface of the can body, with a resin film;

reducing a diameter of at least a part of a portion where the surface coating layer is formed in the can container; and
printing an ink composition to form a print image layer.

20. The manufacturing method for a can container according to claim 18 or 19, wherein the resin film has a structure which is derived from an isophthalic acid.

21. The manufacturing method for a can container according to any one of claims 18 to 20, wherein the resin film contains a polyester resin.

22. The manufacturing method for a can container according to any one of claims 18 to 21, wherein for surface roughness of a surface of the resin film, arithmetic average roughness (Ra) is 2 μm or less, and a maximum height (Rz) is 10 μm or less.

23. The manufacturing method for a can container according to any one of claims 18 to 22, wherein glossiness of the surface of the resin film is 100 or less.

24. The manufacturing method for a can container according to any one of claims 18 to 23, wherein the coating of the resin film includes:

forming a primer layer on at least a part of the outer peripheral surface of the can body;and
coating at least a part of the outer peripheral surface, including the primer layer, with the resin film, in the outer peripheral surface of the can body.

25. The manufacturing method for a can container according to any one of claims 18 to 24, wherein a coefficient of dynamic friction of a surface of the surface coating layer is 0.30 or less.

26. The manufacturing method for a can container according to any one of claims 18 to 25, wherein

thickness of the surface coating layer is 0.5 μm or more and 15 μm or less.

27. The manufacturing method for a can container according to any one of claims 18 to 26, wherein

    the can body has a diameter reduction portion of which a diameter is reduced at one end, and a can barrel portion, and
    the surface coating layer is provided on at least the diameter reduction portion.

28. A manufacturing method for a can container that has a can body of a cylindrical shape, the manufacturing method for a can container, comprising:

    performing atmospheric pressure plasma treatment; and
    printing an ink composition on a surface, on which the atmospheric pressure plasma treatment has been performed, to form a print image layer, wherein
    an outer peripheral surface of the can body is a curved surface or a polyhedral surface.

29. The manufacturing method for a can container according to claim 28. wherein
    the performing the atmospheric pressure plasma treatment includes performing the atmospheric pressure plasma treatment on at least a part of the outer peripheral surface of the can body.

30. The manufacturing method for a can container according to claim 28. wherein
    the performing the atmospheric pressure plasma treatment includes:

    forming a surface coating layer on at least a part of the outer peripheral surface of the can body; and
    performing the atmospheric pressure plasma treatment on at least a part of the surface coating layer.

31. The manufacturing method for a can container according to any one of claims 28 to 30, wherein
    the atmospheric pressure plasma treatment is performed by a remote method of blowing, by a gas flow, plasma generated between electrodes to at least a part of the surface.

32. The manufacturing method for a can container according to any one of claims 28 to 30, wherein
    the atmospheric pressure plasma treatment is performed by a direct method of directly radiating plasma generated between electrodes to at least a part of the surface.

33. The manufacturing method for a can container according to any one of claims 28 to 32, wherein
    surface free energy of the surface, after the atmospheric pressure plasma treatment is performed, is 30 mJ/m$^2$ or more and 50 mJ/m$^2$ or less at a temperature of 25°C.

34. The manufacturing method for a can container according to any one of claims 28 to 33, wherein
    a coefficient of dynamic friction of the surface, after the atmospheric pressure plasma treatment is performed, is 0.30 or less.

35. The manufacturing method for a can container according to any one of claims 28 to 34, wherein
    in the performing the atmospheric pressure plasma treatment, a minimum value of a distance between an electrode which is used, and the surface is 50 mm or less.

36. The manufacturing method for a can container according to any one of claims 28 to 35, further comprising reducing a diameter of at least a part of the can body, wherein
    the can body has a diameter reduction portion of which a diameter is reduced at one end, and a can barrel portion.

37. The manufacturing method for a can container according to any one of claim 19, claims 20 to 27 which are indirectly dependent on claim 19, and claims 28 to 36, wherein
    the forming the print image layer includes:

    forming a receiving layer on the outer peripheral surface of the can body or the surface coating layer; and
    printing an ink composition on the receiving layer to form a print image layer.

38. The manufacturing method for a can container according to any one of claim 19, claims 20 to 27 which are indirectly dependent on claim 19, and claims 28 to 37, wherein
the forming the print image layer is performed by inkjet printing.

39. The manufacturing method for a can container according to any one of claim 19, claims 20 to 27 which are indirectly dependent on claim 19, and claims 28 to 38, further comprising forming, on the print image layer, a protective layer having a resin component.

40. The manufacturing method for a can container according to any one of claim 19, claims 20 to 27 which are indirectly dependent on claim 19, and claims 28 to 39, wherein the forming the print image layer includes fixing the can container to a can container holding member by chucking to print the ink composition.

41. The manufacturing method for a can container according to any one of claims 18 to 40, the manufacturing method for a can container, further comprising forming a base image layer on at least a diameter reduction portion, wherein

the can body has the diameter reduction portion of which the diameter is reduced at one end, and a can barrel portion, and
the surface coating layer or the print image layer is provided on at least the base image layer.

42. The manufacturing method for a can container according to any one of claims 18 to 41, the manufacturing method for a can container, further comprising forming, on at least a diameter reduction portion, an ink-repellent varnish layer having a resin component and a wax component, wherein

the can body has the diameter reduction portion of which the diameter is reduced at one end, and a can barrel portion, and
surface free energy of a surface of the ink-repellent varnish layer is 20 mJ/m$^2$ or less at a temperature of 25°C.

43. A manufacturing method for a can container that has a can body of a cylindrical shape, the manufacturing method for a can container, comprising:

forming a surface coating layer by applying a varnish having a wax component to at least a part of an outer peripheral surface of the can body, or forming an additional varnish layer by coating at least a part of the outer peripheral surface of the can body, with a resin film to form a surface coating layer, and then applying a varnish having a wax component;
reducing a diameter of at least a part of a portion where the surface coating layer is formed in the can container; and
heating the can container to evaporate at least a part of the wax component contained in the surface coating layer or the additional varnish layer.

44. A manufacturing method for a can container that has a can body of a cylindrical shape, the manufacturing method for a can container, comprising:

forming a surface coating layer by applying a varnish having a wax component to at least a part of an outer peripheral surface of the can body, or forming an additional varnish layer by coating at least a part of the outer peripheral surface of the can body, with a resin film to form a surface coating layer, and then applying a varnish having a wax component;
reducing a diameter of at least a part of a portion where the surface coating layer is formed in the can container; and
washing the can container to remove at least a part of the wax component contained in the surface coating layer or the additional varnish layer.

45. The manufacturing method for a can container according to claim 43 or 44, wherein
after the evaporating at least a part of the wax component, or the removing at least a part of the wax component is performed, surface free energy of the can container is 30 mJ/m$^2$ or more and 50 mJ/m$^2$ or less at a temperature of 25°C.

46. The manufacturing method for a can container according to any one of claims 18 to 45, wherein
the can container is a metal cup having an opening at an end portion.

FIG.1

FIG.2

50

1    3

*FIG.3*

**50**

100

200

1  2  3

*FIG.4*

FIG.5

FIG.6

FIG.7

50

6 2 3

100

200

1 2 3

*FIG.8*

FIG.9

FIG.10

50

6 2 3

100

200

1  3

*FIG.11*

50

7

100

200

1    2 3

FIG.12

*FIG.13*

50

8

100

200

1  2  3

*FIG.14*

```
                    ┌─────────────┐
                    │    START    │
                    └──────┬──────┘
                           ↓
        ╔══════════════════════════════════════╗
        ║           WET MOLDING                ║
        ╚══════════════════════════════════════╝ ～～ S10
                           ↓
        ┌──────────────────────────────────────┐
        │        VARNISH IS APPLIED            │
        └──────────────────────────────────────┘ ～～ S20
                           ↓
        ┌──────────────────────────────────────┐
        │      BAKING IS PERFORMED TO          │
        │   FORM SURFACE COATING LAYER         │
        └──────────────────────────────────────┘ ～～ S30
                           ↓
        ┌──────────────────────────────────────┐
        │      PAINT IS APPLIED TO INNER       │
        │     PERIPHERAL SURFACE OF CAN        │
        │  CONTAINER, AND BAKING IS PERFORMED  │
        └──────────────────────────────────────┘ ～～ S40
                           ↓
        ┌──────────────────────────────────────┐
        │    NECKING IS PERFORMED ON CAN       │
        │   CONTAINER TO FORM DIAMETER         │
        │        REDUCTION PORTION             │
        └──────────────────────────────────────┘ ～～ S50
                           ↓
        ┌──────────────────────────────────────┐
        │    INK COMPOSITION IS PRINTED        │
        └──────────────────────────────────────┘ ～～ S60
                           ↓
        ┌──────────────────────────────────────┐
        │      BAKING IS PERFORMED TO          │
        │    FORM PRINT IMAGE LAYER            │
        └──────────────────────────────────────┘ ～～ S70
                           ↓
        ┌──────────────────────────────────────┐
        │    CAN CONTAINER IS INSPECTED        │
        └──────────────────────────────────────┘ ～～ S80
                           ↓
        ┌──────────────────────────────────────┐
        │ CAN CONTAINER IS FILLED WITH CONTENT │
        └──────────────────────────────────────┘ ～～ S90
                           ↓
        ┌──────────────────────────────────────┐
        │ CAN LID IS ATTACHED TO CAN CONTAINER │
        └──────────────────────────────────────┘ ～～ S95
                           ↓
                    ┌─────────────┐
                    │     END     │
                    └─────────────┘
```

*FIG.15*

S10

⊖ FROM
  START

↓

| UNCOILER |
|----------|

S11

↓

| LUBRICATOR |
|------------|

S12

↓

| CUPPING PRESS |
|---------------|

S13

↓

| BODY MAKER |
|------------|

S14

↓

| TRIMMER |
|---------|

S15

↓

| WASHER |
|--------|

S16

↓

⊖ TO S20

*FIG.16*

START

DRY MOLDING ⟩ S110

NECKING IS PERFORMED ON CAN CONTAINER TO FORM DIAMETER REDUCTION PORTION ⟩ S50

INK COMPOSITION IS PRINTED ⟩ S60

BAKING IS PERFORMED TO FORM PRINT IMAGE LAYER ⟩ S70

CAN CONTAINER IS INSPECTED ⟩ S80

CAN CONTAINER IS FILLED WITH CONTENT ⟩ S90

CAN LID IS ATTACHED TO CAN CONTAINER ⟩ S95

END

*FIG.17*

S110

FROM
START

UNCOILER ⟶ S11

RESIN FILM IS LAMINATED
ON COIL MATERIAL ⟶ S120

CUPPING PRESS ⟶ S13

BODY MAKER ⟶ S14

TRIMMER ⟶ S15

TO S40

*FIG.18*

○ FROM S16

SOLUTION CONTAINING RESIN
COMPONENT IS APPLIED ON CAN BODY

S171

PRINTING IS PERFORMED ON BASE

S172

BY BAKING,
BASE IMAGE LAYER IS FORMED

S173

○ TO S20

*FIG.19*

FROM S20

SOLUTION CONTAINING RESIN
COMPONENT IS APPLIED TO
OUTER PERIPHERAL SURFACE
OF CAN CONTAINER

S175

PRIMER LAYER IS FORMED BY BAKING

S176

TO S30

*FIG.20*

○ FROM S16

| INK-REPELLENT VARNISH IS APPLIED |
S181

| BY PERFORMING BAKING, INK-REPELLENT VARNISH LAYER IS FORMED |
S182

○ TO S20

*FIG.21*

FROM S15

VARNISH IS APPLIED — S191

BY PERFORMING BAKING,
ADDITIONAL VARNISH LAYER IS FORMED — S192

TO S50

*FIG.22*

○ FROM S50

↓

SOLUTION CONTAINING
RESIN COMPONENT
IS APPLIED ON SURFACE
COATING LAYER
S51

↓

RECEIVING LAYER IS FORMED
BY PERFORMING BAKING
S52

↓

○ TO S60

*FIG.23*

○ FROM S50

↓

| CAN CONTAINER IS HEATED, AND WAX COMPONENT IS EVAPORATED |
|---|

S55

↓

○ TO S60

*FIG.24*

◯ FROM S50

↓

┌─────────────────────────────────────┐
│      CAN CONTAINER IS WASHED,        │
│  AND WAX COMPONENT IS REMOVED        │  S56
└─────────────────────────────────────┘

↓

◯ TO S60

*FIG.25*

FROM S70

SOLUTION CONTAINING RESIN COMPONENT IS APPLIED ON PRINT IMAGE LAYER

S71

PROTECTIVE LAYER IS FORMED BY PERFORMING BAKING

S72

TO S80

*FIG.26*

FROM S50

CAN CONTAINER IS FILLED WITH CONTENT — S590

CAN LID IS ATTACHED TO CAN CONTAINER — S592

CAN CONTAINER IS WASHED TO
REMOVE WAX COMPONENT — S594

INK COMPOSITION IS PRINTED — S596

BAKING IS PERFORMED TO
FORM PRINT IMAGE LAYER — S70

CAN CONTAINER IS INSPECTED — S80

END

*FIG.27*

FROM S50

ATMOSPHERIC PRESSURE PLASMA
TREATMENT IS PERFORMED

~ S550

TO S60

*FIG.28*

501

530

510 520    520 510
                            550
540

FIG.29

501       501

50       50

*FIG.30*

501b 501a 501a 501b

50 50

*FIG.31*

**501a**   **501b**   **501a**   **501b**

**50**   **50**

FIG.32

*FIG.33*

FIG.34

510b

510a

50

*FIG.35*

FIG.36

FIG.37

FIG.38

## INTERNATIONAL SEARCH REPORT

| International application No. |
|---|
| PCT/JP2021/017452 |

### A. CLASSIFICATION OF SUBJECT MATTER

B05D 3/04(2006.01)i; B05D 5/04(2006.01)i; B05D 7/14(2006.01)i; B21D 51/26(2006.01)i; B32B 27/36(2006.01)i; B65D 25/14(2006.01)i; B65D 25/20(2006.01)i; B65D 25/34(2006.01)i; B41J 2/01(2006.01)i; B32B 1/08(2006.01)i; B32B 7/02(2019.01)i

FI:    B41J2/01 109; B05D3/04 C; B05D5/04; B05D7/14 F; B21D51/26 P; B32B1/08 Z; B32B7/02; B32B27/36; B65D25/14 A; B65D25/20 Q; B65D25/34 B

According to International Patent Classification (IPC) or to both national classification and IPC

### B. FIELDS SEARCHED

Minimum documentation searched (classification system followed by classification symbols)

B41J2/01; B05D3/04; B05D5/04; B05D7/14; B21D51/26; B32B1/08; B32B7/02; B32B27/36; B65D25/14; B65D25/20; B65D25/34

Documentation searched other than minimum documentation to the extent that such documents are included in the fields searched

| | |
|---|---|
| Published examined utility model applications of Japan | 1922–1996 |
| Published unexamined utility model applications of Japan | 1971–2021 |
| Registered utility model specifications of Japan | 1996–2021 |
| Published registered utility model applications of Japan | 1994–2021 |

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X<br>Y | JP 2008-188918 A (JFE STEEL CORPORATION) 21 August 2008 (2008-08-21) paragraphs [0009]-[0019], [0025] | 1-8, 10-11, 13<br>9, 12, 14-15, 17-39, 41, 46 |
| Y | JP 2000-177745 A (TOYO SEIKAN CO., LTD.) 27 June 2000 (2000-06-27) paragraph [0005] | 9, 12, 14-15, 17-27, 36, 46 |
| Y | JP 2010-47308 A (TOYO SEIKAN CO., LTD.) 04 March 2010 (2010-03-04) paragraphs [0009]-[0018] | 14-15, 39, 41 |
| Y | JP 2003-121647 A (NITTO DENKO CORP.) 23 April 2003 (2003-04-23) paragraphs [0015]-[0019] | 28-39, 41, 46 |

☒ Further documents are listed in the continuation of Box C.    ☒ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 29 June 2021 (29.06.2021) | 13 July 2021 (13.07.2021) |

| Name and mailing address of the ISA/<br>    Japan Patent Office<br>    3-4-3, Kasumigaseki, Chiyoda-ku,<br>    Tokyo 100-8915, Japan | Authorized officer |
|---|---|
| | Telephone No. |

Form PCT/ISA/210 (second sheet) (January 2015)

**INTERNATIONAL SEARCH REPORT**

International application No.

PCT/JP2021/017452

C (Continuation).   DOCUMENTS CONSIDERED TO BE RELEVANT

| Category* | Citation of document, with indication, where appropriate, of the relevant passages | Relevant to claim No. |
|---|---|---|
| Y | JP 2014-50786 A (TOYO SEIKAN CO., LTD.) 20 March 2014 (2014-03-20) paragraphs [0018], [0024] | 38 |
| A | JP 11-151900 A (MITSUBISHI ELECTRIC CORP.) 08 June 1999 (1999-06-08) entire text, all drawings | 1-46 |
| A | JP 2002-166918 A (DAIWA CAN COMPANY) 11 June 2002 (2002-06-11) paragraphs [0042]-[0044] | 43 |
| A | JP 2004-148324 A (TOYO SEIKAN CO., LTD.) 27 May 2004 (2004-05-27) paragraphs [0067]-[0068] | 44 |
| A | US 6349586 B1 (BALL CORPORATION) 26 February 2002 (2002-02-26) entire text, all drawings | 1-46 |

Form PCT/ISA/210 (continuation of second sheet) (January 2015)

**INTERNATIONAL SEARCH REPORT**
Information on patent family members

International application No.

PCT/JP2021/017452

| Patent Documents referred in the Report | Publication Date | Patent Family | Publication Date |
|---|---|---|---|
| JP 2008-188918 A | 21 Aug. 2008 | (Family: none) | |
| JP 2000-177745 A | 27 Jun. 2000 | (Family: none) | |
| JP 2010-47308 A | 04 Mar. 2010 | (Family: none) | |
| JP 2013-121647 A | 23 Apr. 2003 | (Family: none) | |
| JP 2014-50786 A | 20 Mar. 2014 | (Family: none) | |
| JP 11-151900 A | 08 Jun. 1999 | (Family: none) | |
| JP 2002-166918 A | 11 Jun. 2002 | (Family: none) | |
| JP 2004-148324 A | 27 May 2004 | (Family: none) | |
| US 6349586 B1 | 26 Feb. 2002 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2019025521 A
- JP 2019108138 A
- JP 2748856 B
- JP 2705571 B
- JP 6314468 B
- JP 6124024 B
- JP 2004025640 A